# EUROPEAN PATENT APPLICATION

(11) **EP 3 267 374 A1**
(43) Date of publication of application: **10.01.2018**
(21) Application number: 16188127.1
(22) Date of filing: 09.09.2016
(51) Int. Cl.: G06Q 10/06, G06Q 10/10

(54) **GUIDED ANALYTICS SYSTEM AND METHOD**

(30) Priority: 04.07.2016 IN 201641022847
(71) Applicant: Mu Sigma Business Solutions Pvt. Ltd., 560066 Bengaluru (IN)
(72) Inventor: Dhingra, Deepinder, 560037 Bangalore (IN)
(74) Representative: Ström & Gulliksson AB

(57) **Abstract**

A guided analytics system is provided. Briefly, according to an example embodiment, a guided analytics system is provided. The guided analytics system includes a memory having computer-readable instructions stored therein. The system also includes a processor configured to define a problem, identify and prepare one or more data sets associated with the problem, analyze the one or more data sets to generate one or more models, and determine, using a guided analytic workflow, one or more solutions to the problem based on the one or more models. The guided analytic workflow includes a plurality of workflow resources associated with each of a plurality of phases of the guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

## Description

### PRIORITY STATEMENT

The present application hereby claims priority to Indian patent application number 201641022847 filed 4 July, 2016**,** the entire contents of which are hereby incorporated herein by reference.

### Field

At least one example embodiment relates generally to a guided analytics system for identifying one or more data sets associated with a business problem, and more particularly to a system and method for analyzing the data sets to generate models and to provide solutions to the business problem using the generated models.

### BACKGROUND

One of the key aspects of a modem business enterprise is to address a wide range of business issues or problems in a systematic and efficient manner. Effectively addressing the business problems requires identification of the data sets corresponding to the specific business problems. Moreover, solutions to the specific business problems need to be determined using the identified data sets.

Most of the existing problem solving techniques do not provide a holistic environment that enables a guided approach towards business problem solving. For example, to identify and analyze a problem related to a business enterprise, an analyst is required to have in-depth understanding of nuances of various technologies that may be time consuming and ineffective. In addition, the existing problem solving techniques do not provide a road map for analysis, and appropriate guidance regarding the specific problem solving techniques to the analyst. In certain cases, an analyst may have to experiment with various problem-solving techniques to determine the effective technique for a specific business problem. This may be time consuming and expensive.

### SUMMARY

The following summary is illustrative only and is not intended to be in any way limiting. In addition to the illustrative aspects, example embodiments, and features described above, further aspects, example embodiments, and features will become apparent by reference to the drawings and the following detailed description.

Example embodiments provide a guided analytics system to ease the process, accuracy and speed of problem solving.

Briefly, according to an example embodiment, a guided analytics system is provided. The guided analytics system includes a memory having computer-readable instructions stored therein. The system also includes a processor configured to define a problem, identify and prepare one or more data sets associated with the problem, analyze the one or more data sets to generate one or more models, and determine, using a guided analytic workflow, one or more solutions to the problem based on the one or more models. The guided analytic workflow includes a plurality of workflow resources associated with each of a plurality of phases of the guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

According to yet another example embodiment, a guided analytics system adapted for use in an establishment is provided. The guided analytics system includes a processor configured to execute a guided workflow to generate one or more solutions for a problem related to the establishment. The system also includes the guided workflow including, a plurality of phases and a plurality of workflow resources associated with each of the plurality of phases of the guided analytic workflow. The plurality of workflow resources being presentable to a user at one or more phases to provide at least one of analytical and statistical information related to a corresponding one of the plurality of phases and to facilitate user selection of one or more analytical techniques and associated parameters for the corresponding phase.

According to yet another example embodiment, a guided analytics system is provided. The guided analytics system includes a memory having computer-readable instructions stored therein. The guided analytics system also includes a processor configured to execute an iterative guided analytic workflow for a data set to generate one or more solutions for a problem, the iterative guided analytic workflow including a plurality of phases. The data related to each iteration of the iterative guided analytic workflow is stored in the memory. The memory is accessed by a user to view the data corresponding to the iterations of the workflow to determine a customized analytic workflow for the business problem. The guided analytics system also includes a plurality of workflow resources associated with each of the plurality of phases of the iterative guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

### BRIEF DESCRIPTION OF THE FIGURES

These and other features, aspects, and advantages of the example embodiments will become better understood when the following detailed description is read with reference to the accompanying drawings in which like characters represent like parts throughout the drawings, wherein:
FIG. 1 is a block diagram of a guided analytics system, according to an example embodiment;
FIG. 2 is flow chart illustrating a process for determining and implementing a guided analytic workflow to provide solutions to a business problem using the system of FIG. 1, according to an example embodiment;
FIG. 3 is flow chart illustrating process for identifying one or more data sets associated with a business problem and analyzing the data sets to provide solutions to a business problem using the system of FIG. 1, according to an example embodiment.
FIG. 4 shows an example screen illustrating a layout with the phases of guided analytic workflow implemented to solve a business problem, according to an example embodiment;
FIG. 5 shows an example data set viewing screen presented to a user of the system of FIG. 1, according to an example embodiment;
FIG. 6 shows an example data preparation screen for identifying and preparing one or more data sets associated with the business problem, according to an example embodiment;
FIG. 7 shows an example data preparation screen for creating new variables and/or attributes of the one or more data sets and to determine a plurality of correlations within each of the data sets, according to an example embodiment;
FIG. 8 shows an example Exploratory data analysis screen for facilitating dataset operations, according to an example embodiment;
FIG. 9 shows an example modeling screen for generating one or more models for a business problem, according to an example embodiment;
FIG. 10 shows an example modeling guide screen, according to an example embodiment;
FIG. 11 shows an example logistic regression screen presented to a user for building a model, according to an example embodiment;
FIG. 12 shows an example screen presented to a user with iterations and checkpoints for a model, according to an example embodiment;
FIGS. 13-A through 13-L show example screens illustrating job automation of a project such as a business problem-solving project, according to an example embodiment;
FIGS. 14-A through 14-B show example screens illustrating cross-module interaction between various modules of the guided analytics system of FIG. 1, according to an example embodiment;
FIGS. 15-A through 15-D show example screens illustrating collaboration between multiple users during one or more phases of the guided analytic workflow implemented by the guided analytics system of FIG. 1, according to an example embodiment;
FIG. 16 shows an example screen illustrating a hypotheses-analysis linkage to map hypotheses with generated reports, according to an example embodiment;
FIG. 17 shows an example text mining screen for integrating structured and unstructured data sets associated with the business problem, according to an example embodiment; and
FIG. 18 is a block diagram of an embodiment of a computing device for implementing a guided analytic workflow to solve a business problem, according to an example embodiment.

### DETAILED DESCRIPTION OF EXAMPLE EMBODIMENTS

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various example embodiments will now be described more fully with reference to the accompanying drawings in which only some example embodiments are shown. Specific structural and functional details disclosed herein are merely representative for purposes of describing example embodiments. Example embodiments, however, may be embodied in many alternate forms and should not be construed as limited to only the example embodiments set forth herein.

Accordingly, while example embodiments are capable of various modifications and alternative forms, example embodiments are shown by way of example in the drawings and will herein be described in detail. It should be understood, however, that there is no intent to limit example embodiments to the particular forms disclosed. On the contrary, example embodiments are to cover all modifications, equivalents, and alternatives thereof. Like numbers refer to like elements throughout the description of the figures.

Before discussing example embodiments in more detail, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Specific structural and functional details disclosed herein are merely representative for purposes of describing example embodiments. Inventive concepts may, however, be embodied in many alternate forms and should not be construed as limited to only the example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or," includes any and all combinations of one or more of the associated listed items. The phrase "at least one of'' has the same meaning as "and/or".

Further, although the terms first, second, etc. may be used herein to describe various elements, components, regions, layers and/or sections, it should be understood that these elements, components, regions, layers and/or sections should not be limited by these terms. These terms are used only to distinguish one element, component, region, layer, or section from another region, layer, or section. Thus, a first element, component, region, layer, or section discussed below could be termed a second element, component, region, layer, or section without departing from the scope of inventive concepts.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements. In contrast, when an element is referred to as being "directly" connected, engaged, interfaced, or coupled to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular example embodiments only and is not intended to be limiting. As used herein, the singular forms "a," "an," and "the," are intended to include the plural forms as well, unless the context clearly indicates otherwise. As used herein, the terms "and/or" and "at least one of" include any and all combinations of one or more of the associated listed items. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Spatially relative terms, such as "beneath", "below", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, term such as "below" may encompass both an orientation of above and below. The device may be otherwise oriented (rotated 90 degrees or at other orientations) and the spatially relative descriptors used herein are interpreted accordingly.

Portions of the example embodiments and corresponding detailed description may be presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

The device(s)/apparatus(es), described herein, may be realized by hardware elements, software elements and/or combinations thereof. For example, the devices and components illustrated in the example embodiments of inventive concepts may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A central processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the central processing unit may include a plurality of processors or one processor and one controller. Also, the processing unit may have a different processing configuration, such as a parallel processor.

Software may include computer programs, codes, instructions or one or more combinations thereof and may configure a processing unit to operate in a desired manner or may independently or collectively control the processing unit. Software and/or data may be permanently or temporarily embodied in any type of machine, components, physical equipment, virtual equipment, computer storage media or units or transmitted signal waves so as to be interpreted by the processing unit or to provide instructions or data to the processing unit. Software may be dispersed throughout computer systems connected via networks and may be stored or executed in a dispersion manner. Software and data may be recorded in one or more computer-readable storage media.

The methods according to the above-described example embodiments of the inventive concept may be implemented with program instructions which may be executed by computer or processor and may be recorded in computer-readable media. The media may also include, alone or in combination with the program instructions, data files, data structures, and the like. The program instructions recorded in the media may be designed and configured especially for the example embodiments of the inventive concept or be known and available to those skilled in computer software. Computer-readable media include magnetic media such as hard disks, floppy disks, and magnetic tape; optical media such as compact disc-read only memory (CD-ROM) disks and digital versatile discs (DVDs); magneto-optical media such as floptical disks; and hardware devices that are specially configured to store and perform program instructions, such as read-only memory (ROM), random access memory (RAM), flash memory, and the like. Program instructions include both machine codes, such as produced by a compiler, and higher level codes that may be executed by the computer using an interpreter. The described hardware devices may be configured to execute one or more software modules to perform the operations of the above-described example embodiments of the inventive concept, or vice versa.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" of "displaying" or the like, refer to the action and processes of a computer system, or similar electronic computing device/hardware, that manipulates and transforms data represented as physical, electronic quantities within the computer system's registers and memories into other data similarly represented as physical quantities within the computer system memories or registers or other such information storage, transmission or display devices.

At least one example embodiment is generally directed to a guided analytics system and method for identifying one or more data sets associated with a business problem and further analyzing the data sets to generate models to provide solutions to the business problem. Example embodiments of the present technique provide an integrated analytics-to-insights framework that enables a guided approach to solve a variety of business problems.

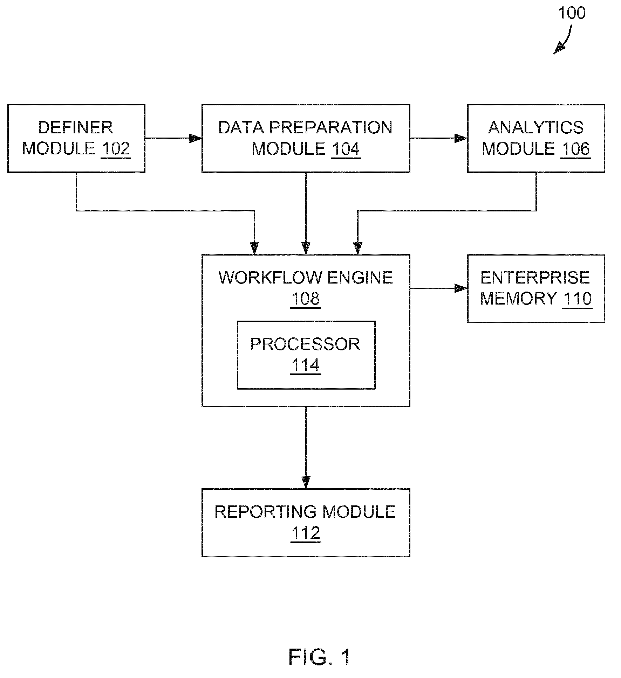

FIG. 1 is a block diagram of a guided analytics system, according to an example embodiment. A guided analytics system 100 (which may hereinafter be referred to as simply the system 100) includes a definer module 102, a data preparation module 104, an analytics module 106, a workflow engine 108, an enterprise memory 110 and a reporting module 112. Each component is described in further details below.

While FIG. 1 illustrates and the following provides a detailed description of various components/modules of the system 100, example embodiments are not limited thereto. For example, the above-identified modules of the system 100 may be implemented via one or more processors (e.g. the processor 114), where the one or more processor is configured to execute computer readable instructions stored on a memory (e.g., the enterprise memory 110) to carry out the functionalities of each of the above-identified modules, which will be further described below.

In one example embodiment, the definer module 102 defines a problem (e.g., a business problem). In one example embodiment, the problem may include a variety of business problems experienced by an establishment/entity. For example, a problem may be defined as lower than expected sale of a product. The manner in which a business problem is defined is described below.

In one example embodiment, input data associated with the problem is received. The input data may include details of the problem to be formulated and analyzed for achieving a desired solution (e.g., a desired level of sale of a product). The input data may also include possible factors and parameters affecting the problem (e.g., seasonal factors, holidays, quarterly sales, geographical location where the product is sold, etc.). In one or more example embodiments, such input data may be obtained from people and/or systems associated with the respective operating environment via a variety of data collection mechanisms such as surveys, assessments and so forth. In the illustrated example embodiment, the definer module 102 defines an initial problem statement that characterizes the problem based upon the input data. In one example embodiment, the define module 102 identifies a plurality of factors affecting the problem.

In another example embodiment, the definer module 102 generates a plurality of hypotheses associated with the business problem. For example, a hypothesis may define a scenario as to why the sale of a certain product is lower than expected. The plurality of hypotheses associated with the problem are generated based upon the identified factors and the input data. In this example, the plurality of hypotheses include mutually exclusive and completely exhaustive (MECE) hypotheses. In one example embodiment, exploratory data analysis (EDA) is performed to generate the plurality of hypotheses. For example, trend analysis of the input data may be performed to generate the hypotheses. Moreover, in one example embodiment, the definer module 102 iteratively updates the initial problem statement, identified factors and the plurality of hypotheses to form an updated problem statement.

In one example embodiment, the data preparation module 104 identifies and prepares one or more data sets associated with the business problem. In one example embodiment, the data preparation module 104 determines attributes of the one or more data sets and to determine a plurality of correlations within each of the data sets. The data sets may include data received from various social media platforms, data sets pertaining to sales of a product, marketing data collected around a marketing campaign for a particular product and the like. In one example embodiment, a user may select input data sources from which data sets are to be obtained. As used herein, the term "user" may refer to both natural people and other entities that operate as a "user". Examples include corporations, organizations, enterprises, teams, or other groups of people. It may also be noted that the user may refer to a data analyst who is trained to perform data analysis on data sets received via different channels.

In one example embodiment, the analytics module 106 analyzes the one or more data sets to generate one or more models and to provide one or more solutions to the business problem using the one or more models. The analytics module 106 includes multiple modules that may implement statistical processes to generate output data. Such output date may be utilized by the user while implementing key business decisions. It should be noted that the analytics module 106 may implement several features and such features may be combined in any order that the user believes is necessary for the problem to be solved or for the goal to be achieved. Moreover, in one example embodiment, the analytics module 106 generates visual representations of the analysis performed on the one or more data sets.

The workflow engine 108 is communicatively coupled to the definer module 102, the data preparation module 104 and the analytics module 106. In one example embodiment, the workflow engine 108 includes at least one processor 114 which implements a guided analytic workflow across the definer module 102, the data preparation module 104 and the analytics module 106 to determine the one or more solutions. In one example embodiment, the guided analytic workflow includes a plurality of phases. In one example embodiment, the processor 114 implements an iterative analytic workflow wherein one or more phases of the workflow are iteratively executed to determine the one or more solutions.

The work flow engine 108 further includes a plurality of workflow resources associated with each of the phases of the guided analytic workflow. In this example, the plurality of workflow resources are presented to a user at one or more phases to provide analytical and/or statistical information related to the respective phase and to facilitate user selection of one or more analytical techniques and associated parameters for the respective phase. In one example embodiment, the plurality of workflow resources include a plurality of guides with information about statistical and/or analytical techniques related to each of the plurality of phases of the guided analytic workflow, implementation parameters associated with each of the statistical and/or analytical techniques, a plurality of checklists related to each of the plurality of phases of the guided analytic workflow, or combinations thereof.

In one example embodiment, the workflow engine 108 facilitates automation of implementation of one or more phases of the guided analytic workflow based upon previous iterations of the workflow. In the illustrated example embodiment, the workflow engine 108 facilitates cross-module interaction between the definer module 102, the data preparation module 104 and the analytics module 106 for one or more of the plurality of phases of the guided analytic workflow.

In another example embodiment, the workflow engine 108 further includes a text mining module (not shown), which integrates structured and unstructured data sets associated with the business problem. The text mining module may include a feature of text categorization. This feature enables the user to generate a plurality of models of the analytics text set. The text categorization may implement several operations such as model building, model diagnostics, predict and iteration history using machine learning models.

In one example embodiment, the enterprise memory 110 is configured to store the plurality of workflow resources associated with each of the plurality of phases of the guided analytic workflow. In addition, the enterprise memory 110 stores data related to each of the plurality of phases of the guided analytic workflow and one or more solutions to the business problem. In one example embodiment, the enterprise memory 110 stores the data generated and/or utilized across a complete problem solving cycle. The reports generated along with summary of each operation and/or step implemented during each of the plurality of phases of the guided analytic workflow is stored in the enterprise memory 110. The enterprise memory 110 may be accessed to create a catalogue of relevant reports that may be shared with multiple stakeholders of the business/organization. The enterprise memory 110 also facilitates creation of a library of solutions that may be leveraged while solving a variety of business problems for an organization. In one example embodiment, the enterprise memory 110 may also store computer-readable instructions for each of the above-described modules of the system 100. Accordingly, one or more processor, such as the processor 114, is configured to execute the computer-readable instructions stored on the enterprise memory 110 to carry out the functionalities of the above-described modules.

In one example embodiment, the reporting module 112 generates a plurality of reports corresponding to each of the plurality of phases of the workflow. In one example embodiment, the reporting module 112 translates one or more solutions of the business problem to one or more business related actions and to integrate the one or more business related actions with business metrics to select optimal solutions for the business problem. Moreover, in one example embodiment, the reporting module 112 maps the plurality of hypotheses generated by the definer module 102 with the generated reports to track progress of the guided analytic workflow.

The guided analytics system 100 described above provides a guided analytics framework for problem solving that educates the user about various analytical techniques available at each phase of the workflow and enables the user to select the appropriate techniques. The manner in which the guided analytics system 100 facilitates an analyst to implement various data operations and analytical techniques to solve business problems is described in further detail below.

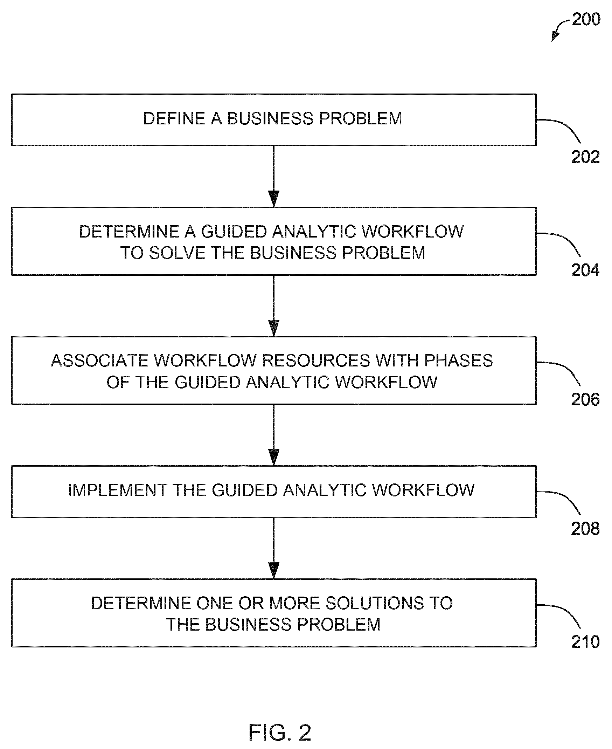

FIG. 2 is a flow chart illustrating a process for determining and implementing a guided analytic workflow to provide solutions to a business problem using the system of FIG. 1, according to an example embodiment. FIG. 2 will be described from the perspective of a processor (processor 114) that is configured to execute computer-readable instructions to carry out the functionalities of the above-described modules of the system 100 shown in FIG. 1.

At step 202, the processor 114 defines a problem (e.g., a business problem). In one example embodiment, the business problem may include a variety of business problems experienced by an establishment. The establishment may include business organizations, retail outlets, consumer outlets, hotels or combinations thereof. However, a variety of other problems in different environments may be defined in a similar way. Examples of business problems include, but are not limited to, determining key drivers from the sales of a product, cross-sell analysis, determining key factors that influence a customer purchasing behavior and the like.

At step 204, the processor 114 determines a guided analytic workflow to solve the business problem. In one example embodiment, the guided analytic workflow includes a plurality of phases and a plurality of workflow resources.

At step 206, the processor 114 associates the workflow resources with phases of the guided analytic workflow. In one example embodiment, the workflow resources are presented to a user at one or more phases to provide analytical and/or statistical information related to the respective phase and to facilitate user selection of one or more analytical techniques and associated parameters for the respective phase. In one example embodiment, an automation of implementation of one or more phases of the guided analytic workflow is facilitated based upon previous iterations of the workflow.

At step 208, the processor 114 implements the guided analytic workflow. In one example embodiment, the guided analytic workflow is processed and implemented across several phases. One of the phases may be the problem definition phase. Another phase may include identification and preparation of one or more data sets associated with the business problem. Moreover, the guided analytic workflow may include analysis of one or more data sets to generate one or more models.

At step 210, the processor 114 determines one or more solutions to the business problem. In one example embodiment, the processor 114 generates data models to determine one or more solutions.

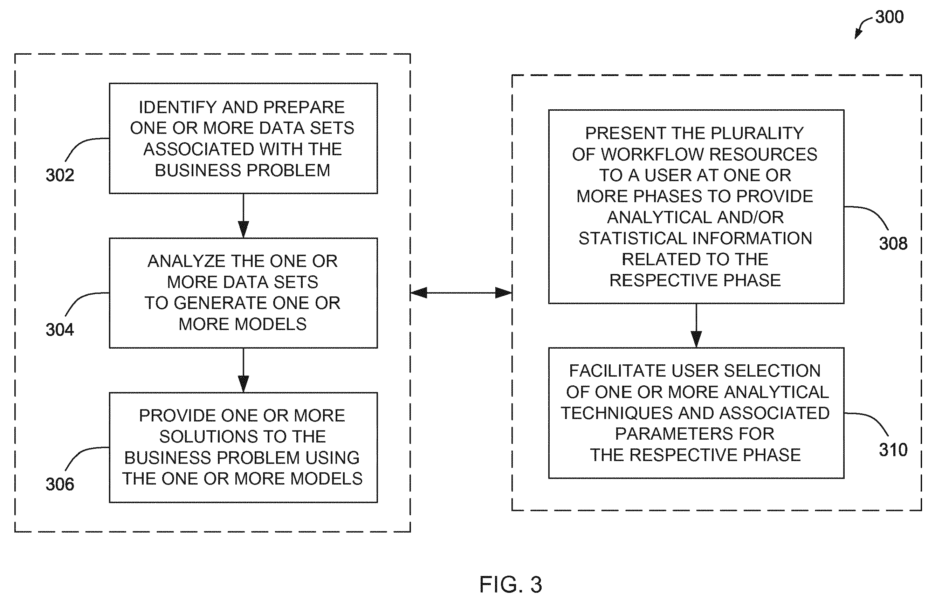

FIG. 3 is a flow chart illustrating a process for identifying one or more data sets associated with a business problem and analyzing the data sets to provide solutions to a business problem using the system of FIG. 1, according to an example embodiment. Each step is described in further detail below. FIG. 3 will be described from the perspective of a processor (processor 114) that is configured to execute computer-readable instructions to carry out the functionalities of the above-described modules of the system 100 shown in FIG. 1.

At step 302, the processor 114 identifies and prepares one or more data sets associated with the business problem. In one example embodiment, the data sets may include, but is not limited to, data received from social media platforms, data pertaining to sales of a product, marketing data collected around a marketing campaign for a particular product, and the like. In general, data set may include keywords for a certain product, the product name, a name of a business or an organization, etc. In one example embodiment, data sets include text strings and numeric data. In one example embodiment, the identification and preparation of data sets includes combining a plurality of data sets received from multiple sources into analytic data sets. The analytic data set may be prepared in a suitable format for further analysis. The data sets are retrieved from one or more input data sources.

At step 304, the processor 114 analyzes the one or more data sets to generate one or more models. In one example embodiment, the generated models are utilized to provide one or more solutions to the business problem. Moreover, the model generation provides an in-depth analysis of regression techniques and may include pre-model processing. In some example embodiments, the models are generated based on a mean, variance and co-variance of the analytic data set.

At step 306, the processor 114 provides one or more solutions to the business problem using the one or more generated models. Examples of models used for problem solving include linear regression, logistic regression, multi-logistic regression, general linear modeling, generalize liner modeling, or combinations thereof.

At step 308, the processor 114 presents the plurality of workflow resources to a user at one or more phases to provide analytical and/or statistical information related to the respective phase.

At step 310, the processor 114 facilitates user selection of one or more analytical techniques and associated parameters for the respective phase. As illustrated in FIG.3, the step 308 and 310 are presented to user at each step such as step 302, step 304 and step 306 of the process 300.

In one example embodiment, the above mentioned process flow of FIG. 2 and FIG. 3 are implemented for use in an establishment. The process flow includes steps for executing a guided workflow to generate one or more solutions for a business problem related to the establishment. Further, the process includes implementing the guided analytic workflow, which includes a plurality of phases. In addition, the process includes associating a plurality of workflow resources with each of the phases of the guided analytic workflow. The plurality of workflow resources are presented to a user at one or more phases to provide analytical and/or statistical information related to the respective phase and further facilitating user selection of one or more analytical techniques and associated parameters for the respective phase.

The above described system and method for implementing a guided workflow for solving a business problem, may employ several user interfaces to enable the user to analyze the data sets associated with the business problem, to generate models and to provide solutions to the business problem using the generated models. Some example interfaces are described in further detail below with regard to an example business problem. It is noted that the present technique is by no means intended to be limited to these example embodiments.

As an example of a business problem, a cross-sell analysis is performed for computer hardware and services company that desires to identify one or more factors enticing the company's previous laptop and/or desktop business-to-business (B2B) customers to buy a workstation. The guided analytics system such as described herein facilitates the end-to-end problem solving by implementing a guided analytic workflow to determine the factors influencing the cross-selling of workstations to the customers.

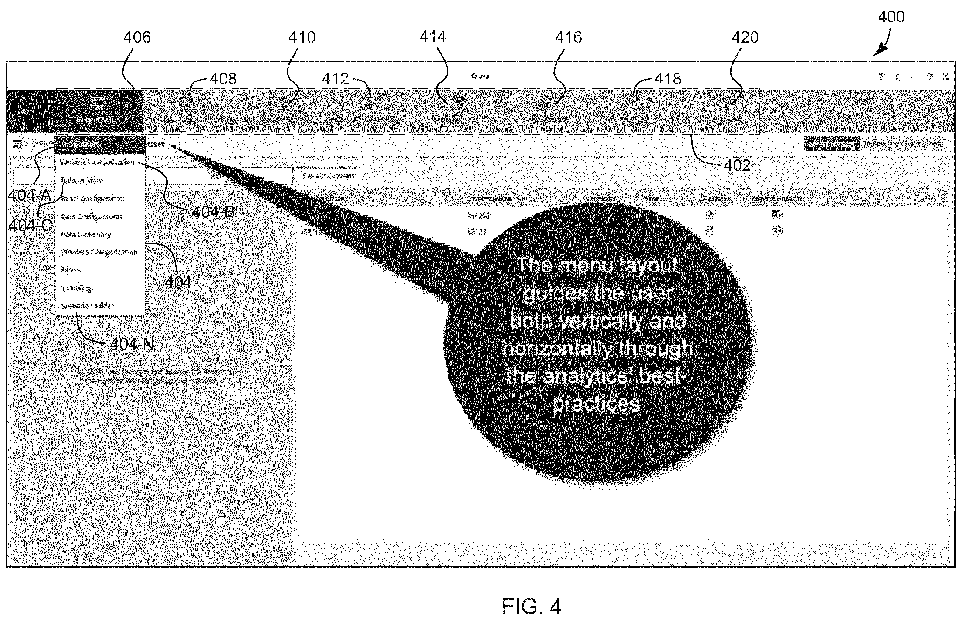

FIG. 4 shows an example screen illustrating a layout with the phases of guided analytic workflow implemented to solve a business problem, according to an example embodiment. In this example, this layout 400 is presented to a user once the problem has been defined by the user. As illustrated, a horizontal bar 402 includes a number of menu options to guide the user throughout the analytic workflow. The menu options in the horizontal bar 402 include 'Project Setup' (tab 406), 'Data Preparation' (tab 408), 'Data quality analysis' (tab 410), 'Exploratory Data analysis' (tab 412), 'Visualizations' (tab 414), 'Segmentation' (tab 416), 'Modeling' (tab 418), and 'Text mining' (420). Each of said menu options as described above also includes a vertical guided option such as the guided option 404 an example of which is illustrated with respect to the tab 404. Examples of these guidance options 404 include data set view, data dictionary, panel configuration, variable configuration, filters, sampling, and the like (as represented by reference numeral 404-A through 404-N). In one example, the guidance option 404 includes a tab that allows the user to add (Add data set 404-A) and export a dataset at any stage during the implementation of the workflow.

Continuing with the example of cross-sell analysis, the data sets associated with the business problem may include various data points regarding notebook and desktop customers along with corresponding target flags. In this example, the target flags provide data related to purchase of workstations by the customers. Such data sets are selected to determine relevant factors leading to cross-sell of workstation. Each of the menu options described above may have several sub-options. For example, in the Project Setup (tab 406), the user is provided with options of viewing the data set, categorical variable conversion, data dictionary upload etc. each of which is arranged in a logical sequence (as shown by drop-down menu 404). Other options may have similar drop-down menu to provide additional information or options to the user.

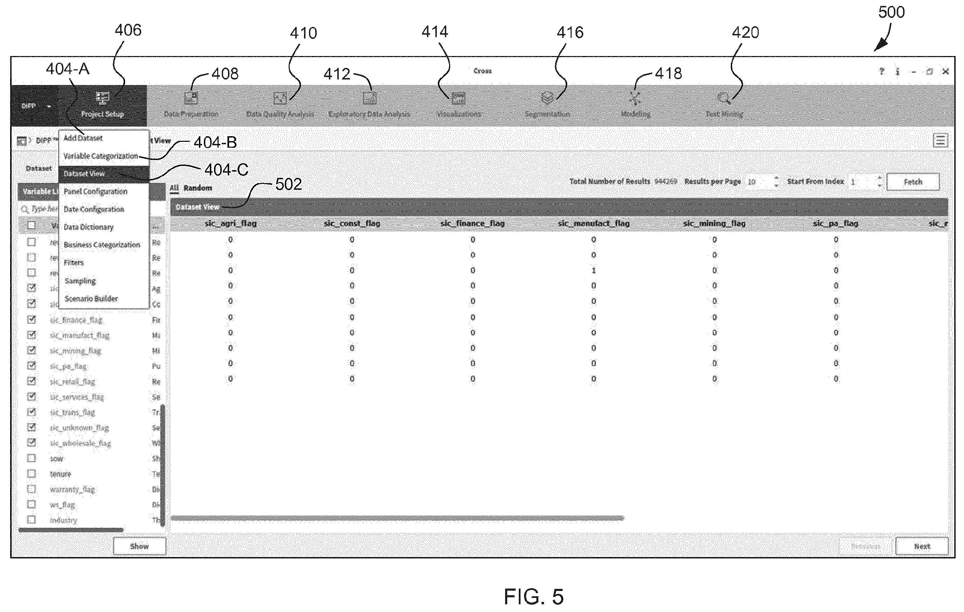

FIG 5 shows an example screen data set viewing screen 500 presented to a user of the system 100 of FIG. 1, according to an example embodiment. On selecting the 'Data set View' (option 404-C from drop-down menu 404) in the screen 500 a data set view screen 502 is presented to the user. As illustrated, the screen 502 provides the details related to data sets associated with the business problem.

In the illustrated example, once the relevant data set is imported in the system, the user may view the data set (option 404-C from drop-down menu 404) and may perform the required data operations. In this example, the user determines flags indicative of belongingness of a customer to a particular industry. In certain examples, the user may change the viewing options of data in this screen. For example, the user may view the flags as one 'Industry' column with 'n' category industry variables rather than 'n' columns separately having binary variables for belongingness. The user may subsequently choose to arrange the data accordingly. In this example embodiment, other vertical menu options from drop-down 404 may be considered irrelevant or insignificant with respect to the underlying business problem. Accordingly, the user may proceed to the next horizontal menu option. In this example, the user is presented with the next tab for Data preparation (tab 408).

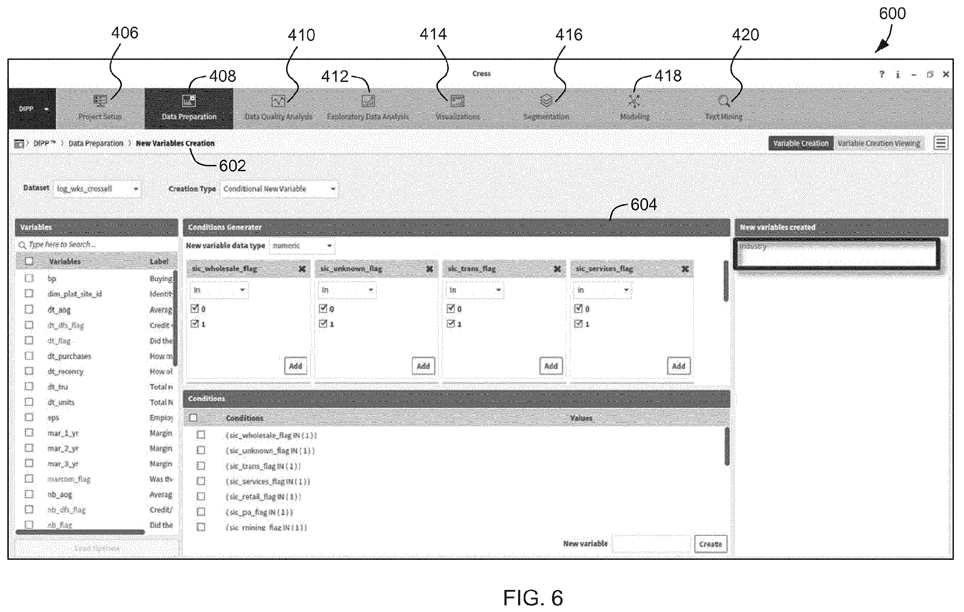

FIG. 6 shows an example data preparation screen 600 for identifying and preparing one or more data sets associated with the business problem, according to an example embodiment. On selecting the 'Data Preparation View' (tab 408) and vertical g option 'New variable creation' (as represented by reference numeral 602), the user is presented with a new variable view screen 604. In the screen 604, the user is provided with details with respect to conditions generator, listing of plurality of conditions and new variables created for the problem. As described earlier, in each of said screens, the user is presented with a variety of workflow resources to assist the user with the execution of the workflow. For example, a help manual presented to the user in the data preparation tab 408 assists the user in determining if a conditional new variable is required to solve the business problem of the cross-sell analysis.

In this example embodiment, the new variable required for the problem solving with respect to cross-sell analysis and providing solution, is created using the 'New variable creation' (tab 602). Further, the operations carried out for the creation of new variable are saved in the enterprise memory 110 of FIG.1 along with the generated reports. The stored operations and processes in the enterprise memory 110 of FIG.1 may be utilized by the user for future reference.

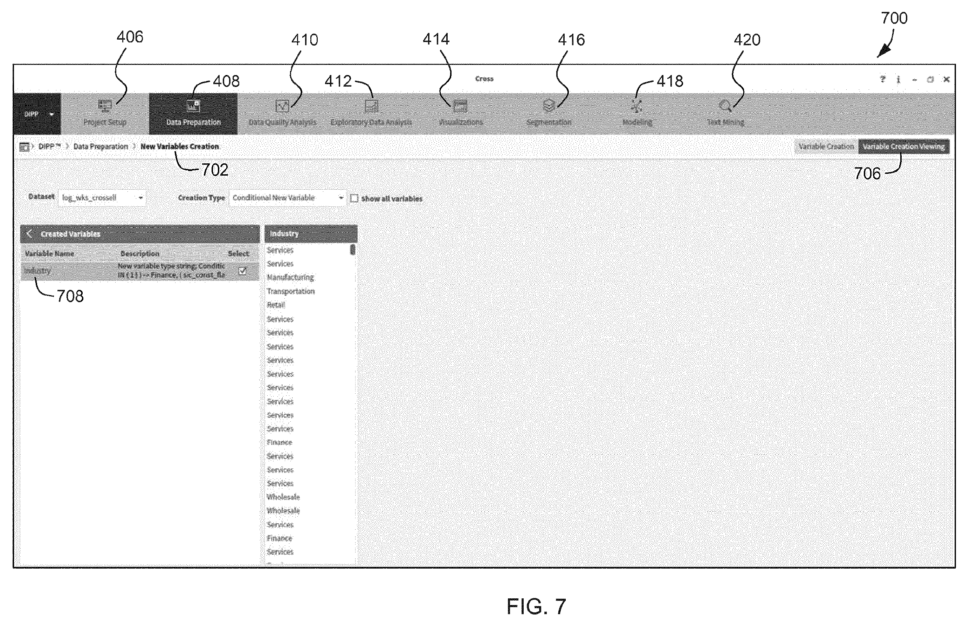

FIG. 7 shows an example data preparation screen 700 for creating new variables/attributes of one or more data sets and to determine correlations within each of the data sets, according to an example embodiment. On selecting the 'Data Preparation View' (tab 408) and variable creation viewing (cell 706) in the screen 700, the user is presented with a variable viewing screen. The created variables may be viewed using the viewing option (tab 708).

In this example, data quality analysis and the exploratory data analysis are performed to verify the quality of the data. In the illustrated example, the quality checks are performed and the data is determined in an analytical form that is free of outliers and missing values. In some examples, the data is treated using the Data Quality Analysis (tab 410). Following the steps guided by the Data Quality Analysis (tab 410), the user is directed to the Exploratory Data Analysis tab 412.

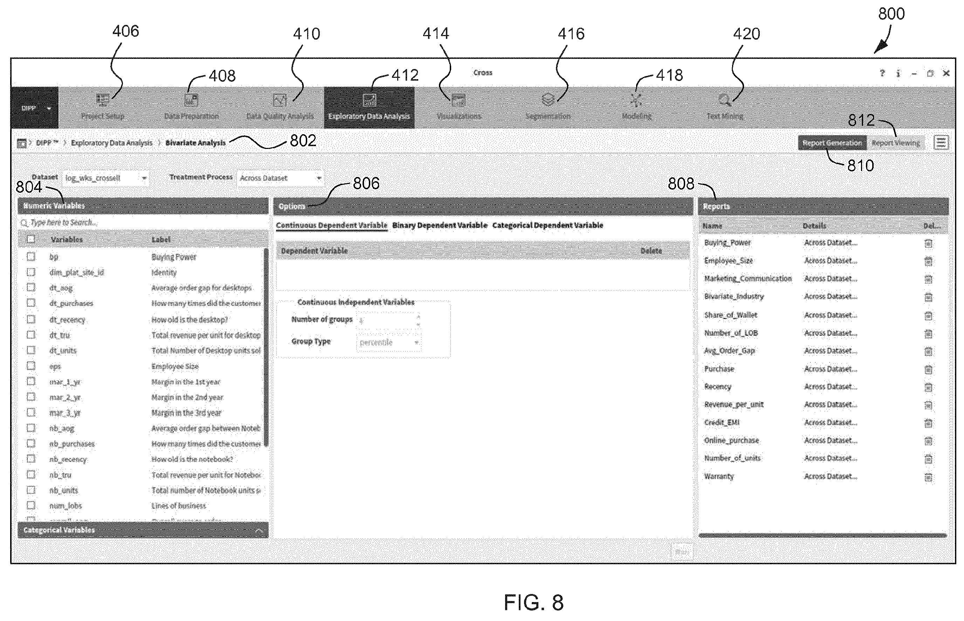

FIG. 8 shows an example Exploratory data analysis screen 800 for facilitating dataset operations, according to an example embodiment. In this example, the 'Exploratory data analysis' (tab 412) and bivariate analysis (options 802) are selected and the user is presented with numeric variables 804, options for the variables 806, and reports 808.

In the illustrated embodiment, the Exploratory Data Analysis tab 412 guides the user to determine and verify relationship between the 'flag' and other variables. The flag indicates the workstation purchased by a customer.

In one example embodiment, the analytics module 106 of system 100 facilitates data analysis across variables of the dataset. Variable processing in exploratory data analysis (tab 412) includes data processing steps such as renaming and classification of variables into numeric, string and manual categorization based on distinct values in a variable. Additionally, it also includes new variables creation including categorical indicators, event indicators, binning, ad stock variables, lag/lead transformations, moving averages, and the like.

Other capabilities of exploratory data analysis (tab 412) include, but are not limited to, providing a data summary with a visual representation of the analytics dataset, counts of the unique values in a variable and a statistical summary 806. In continuation, data exploration may also be performed using the exploratory data analysis (tab 412). Further, a user may select the 'report viewing' (tab 812) to view reports including visual data representations such as charts along with other analysis reports like frequency analysis.

It should be noted that in one example embodiment, the processor 114 performs the exploratory data analysis to process the data for univariate, multivariate, missing, outlier & transformation treatments. In one example embodiment, the exploratory data analysis (tab 412) facilitates univariate and bivariate analysis for the analytic data set. In one example embodiment, quantitative (e.g., statistical) analysis is performed for the analytic data set. In this example, the univariate analysis includes attributes such as, but not limited to, measures of locations, measures of dispersion, normality tests, distributions, percentile values, and combinations thereof. In another example embodiment, multivariate analysis is performed for the analytic data set. The bivariate analysis includes determining a variation with respect to one or more statistical attributes.

The reports generated (as shown in sub-screen 808) during the analysis operations are saved in the enterprise memory 110 of FIG.1. The saved reports may be accessed by the user at any point in time. Once the data is prepared and conditioned, the user may be directed to the next phase of the guided analytic workflow such as the modeling phase of the workflow.

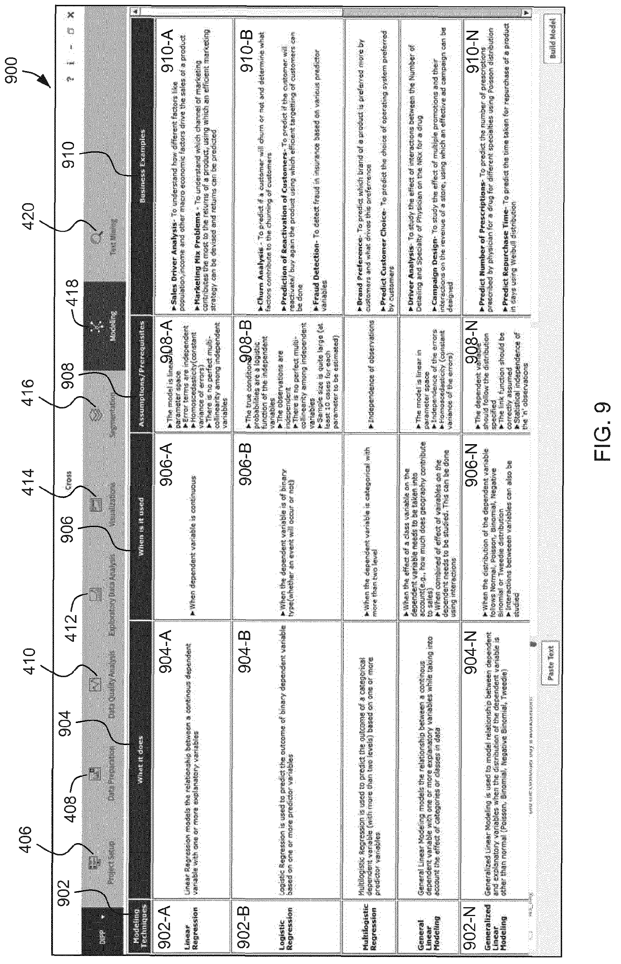

FIG. 9 shows an example modeling screen 900 for generating models, according to an example embodiment. As a user selects the modeling option (tab 418), modeling techniques are displayed on the screen. Again, resources such as a modeling guide provide assistance to the user with respect to suitable modeling techniques for the defined problem.

Each modeling technique (column 902), includes details such as 'What it does' (column 904), When is it used (column 906), Assumptions/Prerequisites (column 908) and Business examples (910). In this example, the modeling techniques are represented by reference numeral 902-A through 902-N. Examples of modeling techniques include Linear Regression 902-A, Logistic Regression 902-B, Multi-logistic regression 902-C, General Linear Modeling 902-D, Generalize Liner Modeling 902-E, or combinations thereof. The functions of each of modeling techniques are illustrated in column 904 and are represented by reference numerals 904-A through 904-N.

For example, for the linear regression modeling technique, the column 904-A provides the functioning of the linear regression model. In addition, the modeling guide 900 provides the information about situations where a particular model may be used (column 906). For example, for linear regression modeling 904-A, the cell 906-A includes information about the case where dependent variable is continuous, a linear regression model may be used. Further, presumption/prerequisites for each model are shown in column 908. In addition, the business examples are shown in column 910 and described in rows 910-A through 910-N. Following the initial analysis step, the user is directed to the modeling tab 418.

In one example embodiment, the modeling guide as shown in screen 900 assists the user to generate one or more models representative of one or more solutions to a problem specified by a user. For example, the modeling guide may provide an in-depth analysis using regression techniques. In one example, models are generated based on a mean, variance and co-variance of the analytics data set.

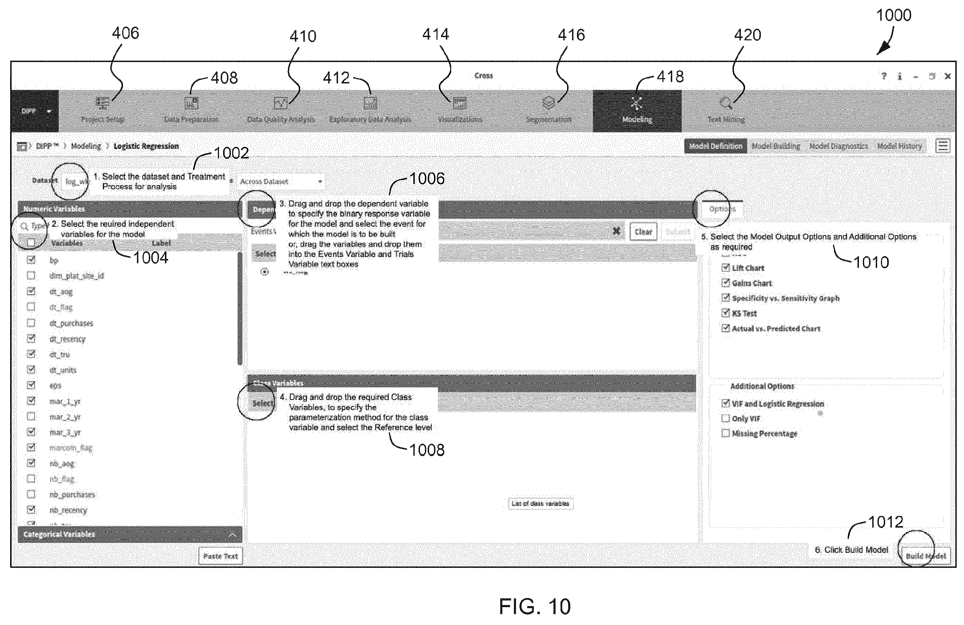

FIG. 10 shows an example modeling guide screen 1000 illustrating prediction and/or activation of customers with respect to the cross-sell analysis business problem, according to an example embodiment. On selecting the 'Modeling (tab 418), several modeling techniques are displayed on the screen. Further, on selecting a particular modeling technique to be implemented, the screen 1000 is presented to the user. The screen 1000 provides details and inputs for dataset and treatment process for the analysis. In this example, logistic regression technique is selected.

The workflow shown in FIG. 10 provides guidance to the user to understand the steps for the modeling. The user may select the data set and treatment process for analysis using option 1002. Further, the required independent variables for the model are selected using option 1004. The dependent variables may be dragged and dropped in window 1006. Other variables such as the required class variables may be dragged and dropped in window 1008 to specify the parameterization method for the class variable and to select the reference variable.

Moreover, the user may select the model output options and additional options using the options window 1010. Further, the user may proceed to build the model by using the build model option (tab 1012). Such model may be utilized to provide one or more solutions to the business problem such as the cross-sell analysis described above.

In some examples, the guided analytics system 100 includes a scoring mechanism for several models within the guided analytics framework for problem solving. The system 100 enables the user to provide a score to one or more models generated and utilized by the guided analytic workflow. In one example, the user may select the model for each business problem. For example, a dropdown list may be provided to the user to select a model such as a linear model, a logistic model, a generalized linear model (GLM) model and so forth. Further, the user may select datasets as required with respect to the model and verify the dataset. The user is also provided with a modify option to modify the scoring with respect to a model.

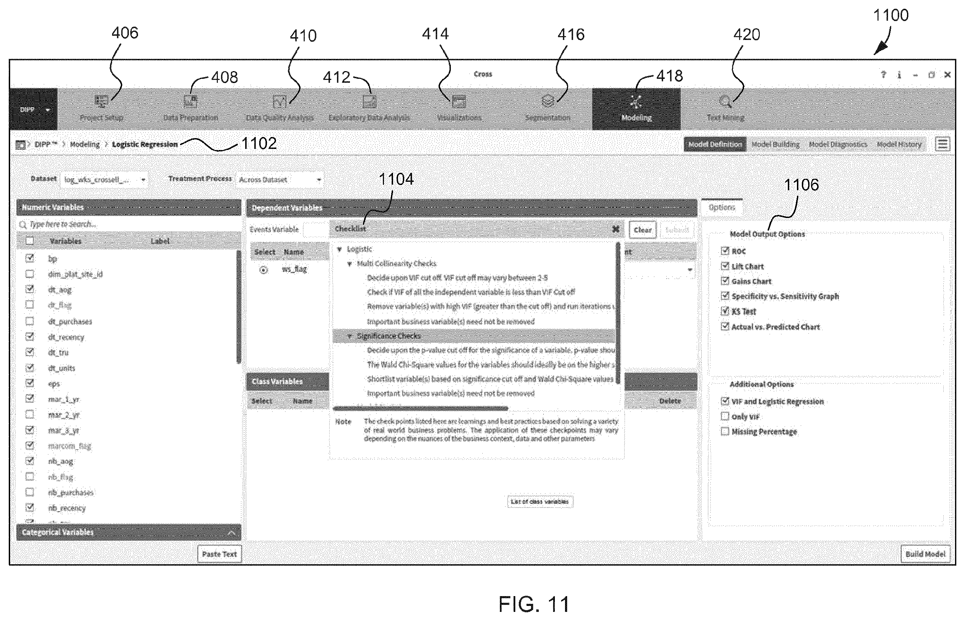

FIG. 11 shows an example modeling screen 1000 with details for screen 1100 with details for logistic regression 1102 screen selected by a user of the system 100, according to an example embodiment. The screen 1100 presents workflow resources such as a checklist 1104 to the user. The checklist 1104 may include guidelines such as a set of industry best practices that the user may refer to for creating the model. For example, the checklist includes multi collinearity checks for the parameters. The model is built with variables in accordance with the checklist. The screen 1100 also provides various model output options 1106 to be selected by the user.

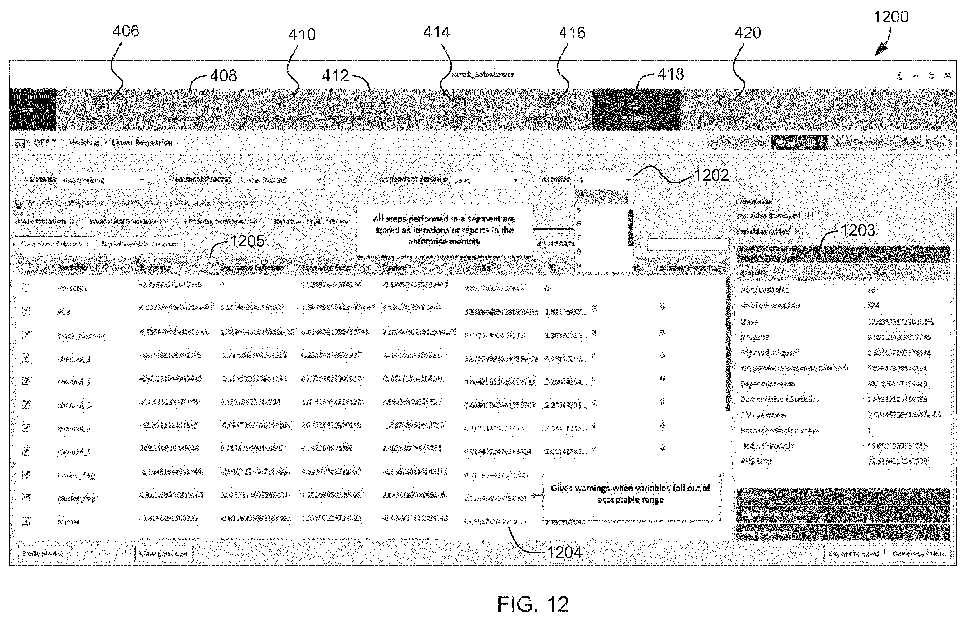

FIG. 12 shows an example screen 1200 presented to a user with details of iterations and checkpoints for a model, according to an example embodiment. As illustrated, multiple iterations such as represented by reference numeral 1202 may be performed for various phases of the guided analytic workflow and data associated with such iterations are stored in the enterprise memory 110 of FIG. 1.

In one example, the drop down 1202 illustrates multiple iterations. Once a user selects a particular iteration from the dropdown 1202, model statistics for each value of iteration is presented to the user via a sub-screen 1203. In this example, for the iteration number 4, the model statistics includes the value of 16 for the number of variables. Similarly, other statistical information such as statistical values for number of variables, number of observations, Mape and R- square for each iteration selected from the dropdown 1202 may be displayed via the model statistics sub-screen 1203. Further, the statistics related to each variable for each of the iterations (for example, the t-value, the p-value, VIF value etc) is presented to the user via sub-screen 1205. Further, if the values of the variables are out of range then warnings may be used. For example, if the p-value (represented by reference numeral 1204) is out of a specified range, then a user may be presented with warning to make appropriate changes. In some embodiments, the iterations may be performed by changing or by removing certain variables based on previous iterations.

As described above, the guided analytics system 100 facilitates implementation of an iterative analytic workflow to solve a business problem. The data associated and/or generated for each of the iterations of the iterative analytic workflow is stored and may be accessed and shared by the users of the system. In some example embodiments, the output data generated over multiple iterations may be utilized to automate the entire problem solving journey.

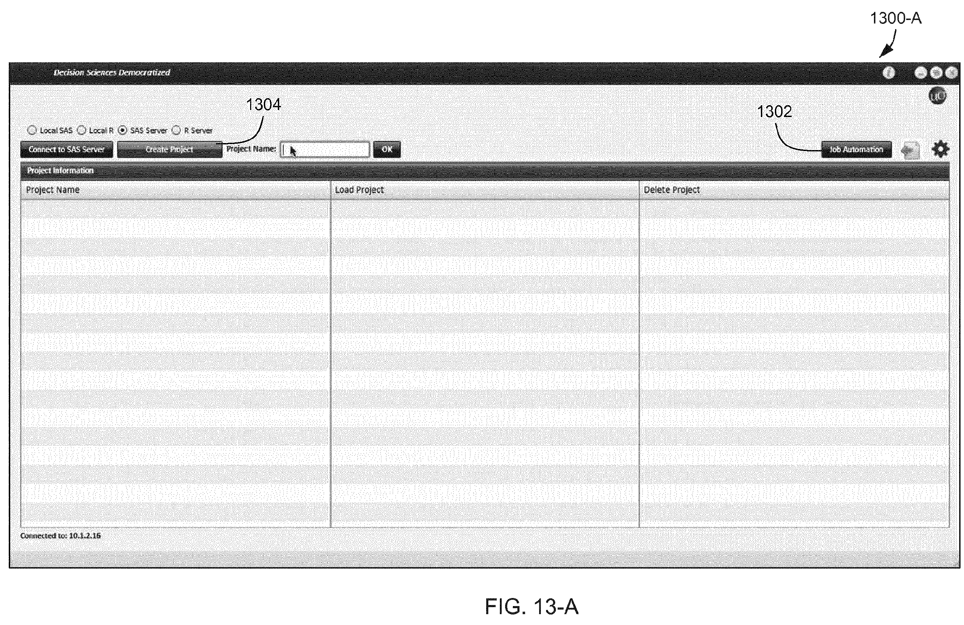

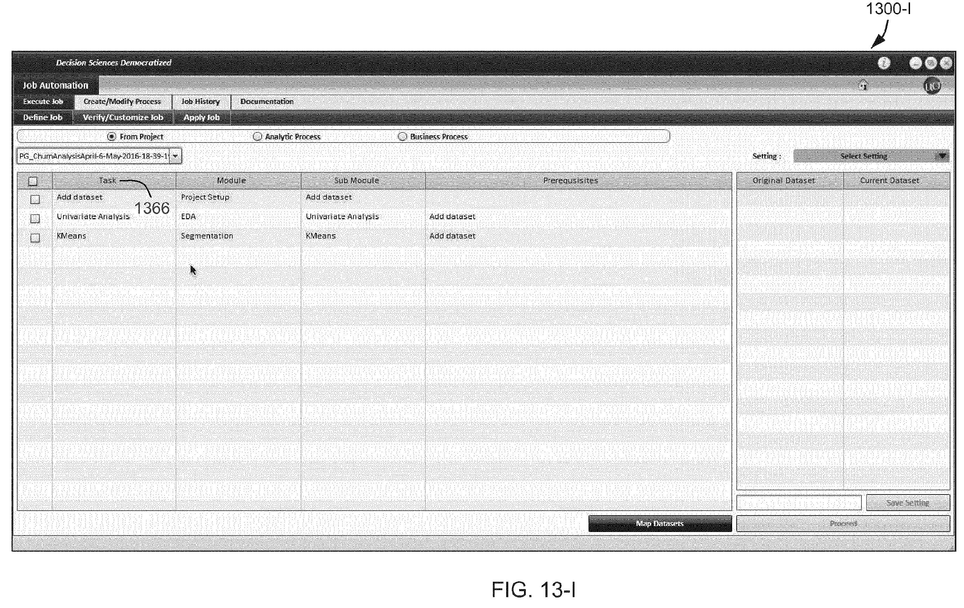

FIG. 13-A through 13-L shows example screens 1300-A through 1300-L illustrating job automation of a project such as a business problem-solving project, according to an example embodiment. FIG. 13-A is an example screen 1300-A illustrating job automation of a project such as a business problem-solving project, according to an example embodiment. The screen 1300-A includes a job automation (tab 1302) for automation of a particular workflow implemented in a project. As may be seen, a user is presented with an option to create a project (tab 1304) for the job automation.

In one example embodiment, the project includes a guided analytic workflow having one or more phases implemented for problem solving. For example, the phases of the guided analytic workflow may include data preparation, data quality analysis, exploratory data analysis, visualizations, and segmentation that may be executed. Moreover, data related to each of these phases is saved in the enterprise memory 110 or any other storage repository that may be accessed by the users of the system 100. The user may automate the implementation of the guided analytic workflow once data for previous iterations is available. The job automation may facilitate the execution of the workflow for multiple data sets and for diverse variables of input data sets.

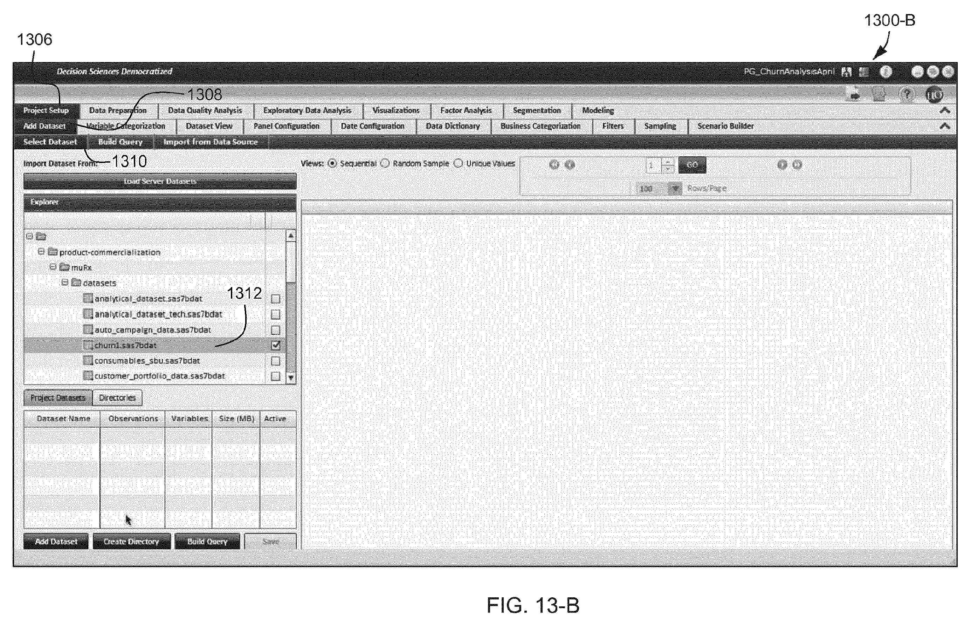

FIG. 13-B is an example screen 1300-B illustrating the details of project setup for job automation of a project, according to an example embodiment. In this example, the project setup includes options to import a dataset from existing servers or adding a new dataset for the project. In one example, the dataset includes input variables that may be associated with the business problem having various data points. As the user selects the 'project setup' option (tab 1306) in the menu, the user is presented with an option to add a dataset 1308 and select a dataset 1310. The user may select a desired dataset 1312 and import the dataset for the project.

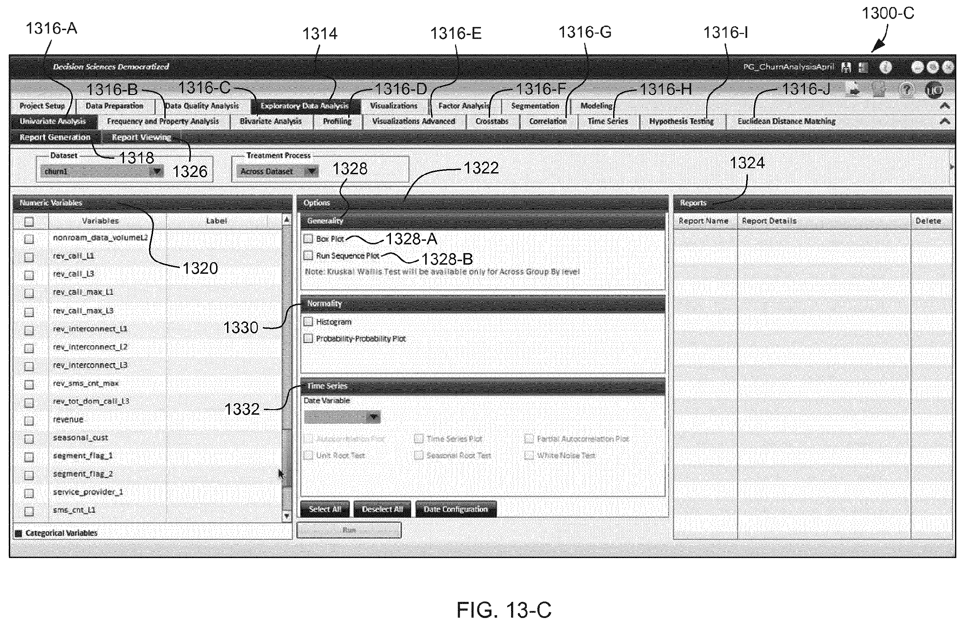

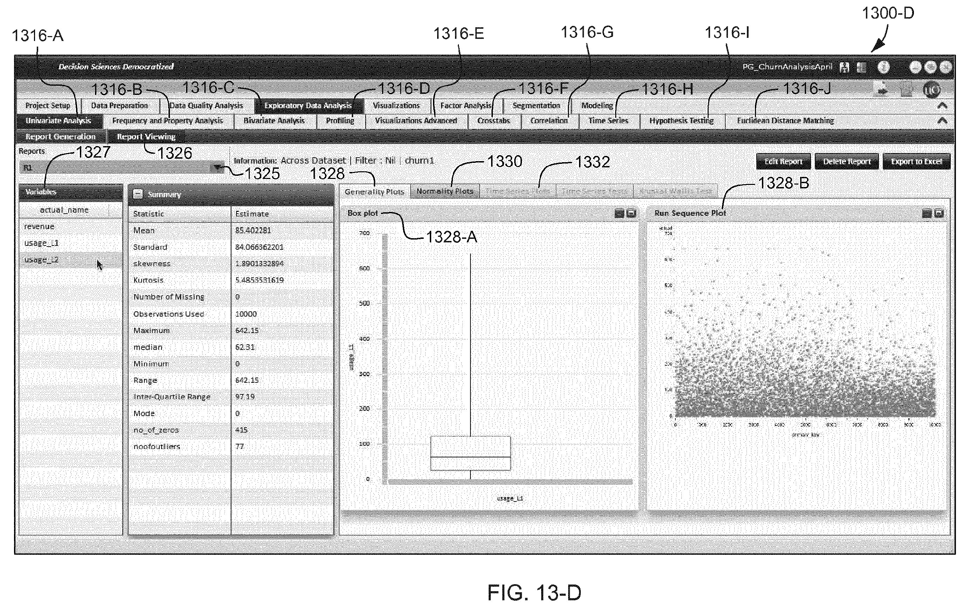

FIG. 13-C and FIG. 13-D are example screens 1300-C and 1300-D illustrating an Exploratory data analysis for the selected dataset such as dataset 1312 of FIG. 13-B, according to example embodiments.

The data preparation, data quality analysis and the exploratory data analysis facilitates dataset operations, variable processing, data exploration and treatment for the dataset. In this example, the user selects to perform data quality analysis to verify the quality of the data. In one example, as the user selects the 'Exploratory data analysis' (tab 1314), the user is presented with several options for analysis. For example, the user is presented with options such as univariate analysis 1316-A, frequency and property analysis 1316-B, bivariate analysis 1316-C, profiling 1316-D, vitalization advanced 1316-E, cross tabs 1316-F, correlation 1316-G, time series 1316-H, hypothesis testing 1316-1 and Euclidean distance making 1316-J. The screen 1300-C illustrates univariate (tab 1316-A) analysis performed on analytics data set. Other capabilities of exploratory data analysis (tab 1314) include providing a data summary with a visual representation of analytics dataset, counts of the unique values in a variable and statistical summary with a wide range of options by selecting the report generation (tab 1318). As can be seen, the numeric variables (table 1320) are displayed to the user along with various options (table 1322) for data configuration and analysis.

Moreover, the reports (table 1324), as illustrated in screen 1300-C may be generated, saved and accessed by the user at any point in time. The user may view the reports using the report viewing tab 1326. In one example, a report may include several plots such as a generality plot 1328, a normality plot 1330 and a time series plot 1332 for selected variables that can be viewed by the user. Further, on selecting these plots such as the generality plot 1328 a user can view other plots such as a box plot 1328-A and a run sequence plot 1328-B. Thus, a user is provided with multiple options of viewing the generated reports for a data set.

The reports can be generated for different data sets or similar data sets. In one example, multiple reports can be accessed in two ways. One way of accessing report is using the reports (table 1324). As the user clicks on the report which is existent in the reports (table 1324), the screen 1300-D is presented to the user. Another way of accessing the report is by a report viewing tab 1326, as illustrated in screen 1300-D. The drop down 1325 enables the user to switch across different reports. In this example, the user has selected to view report R1 from the drop down 1325. The report R1 is generated for variables 1327 such as revenue, usage_L1 and usage L2. In this example, the box plot 1328-A and the run sequence plot 1328-B is shown for the report R1.

The guided analytics system 100 described herein enables the user to discover one or more analytic workflow for solving a problem using an iterative discovery mechanism. The user is allowed to create, edit, delete and select an appropriate analytic workflow for solving a problem. As described above, the analytic workflow includes one or more phases, which are implemented for problem solving. For example, the phases of the guided analytic workflow may include data preparation, data quality analysis, exploratory data analysis, visualizations, and segmentation that may be executed.

In one example, the iterations of the one more analytic workflow are captured and stored in the enterprise memory 110 of FIG.1. The iterative discovery mechanism of the guided analytics system 100 enables the user to determine an optimum analytic workflow based on the previous iterations.

For example, the user may perform a phase of analytic workflow such as data preparation and then continue to the next phase of the analytic workflow to perform exploratory data analysis. The user may create several reports in the exploratory data analysis phase. Based on the generated reports for a number of iterations, the user may modify the analytic workflow or create a new analytic workflow by selecting appropriate phases. For example, the user may select or discard the step of the data preparation and select an optimum report in exploratory data analysis for creating an analytic workflow.

As described before, workflow resources such as checklist related to each of the plurality of phases of the guided analytic workflow guide the user throughout the implementation of the workflow. Moreover, the iterative discovery mechanism of the guided analytics system 100 guides the user about utilization and/or non-utilization of one or more modules of the plurality of analytic modules. The iterative discovery mechanism process of the analytic workflow is iterative within the plurality of analytic modules or across the plurality of analytic modules. After a number of iterations, the user may discover and finalize an optimum and systematic analytic workflow to follow and execute to solve the problem.

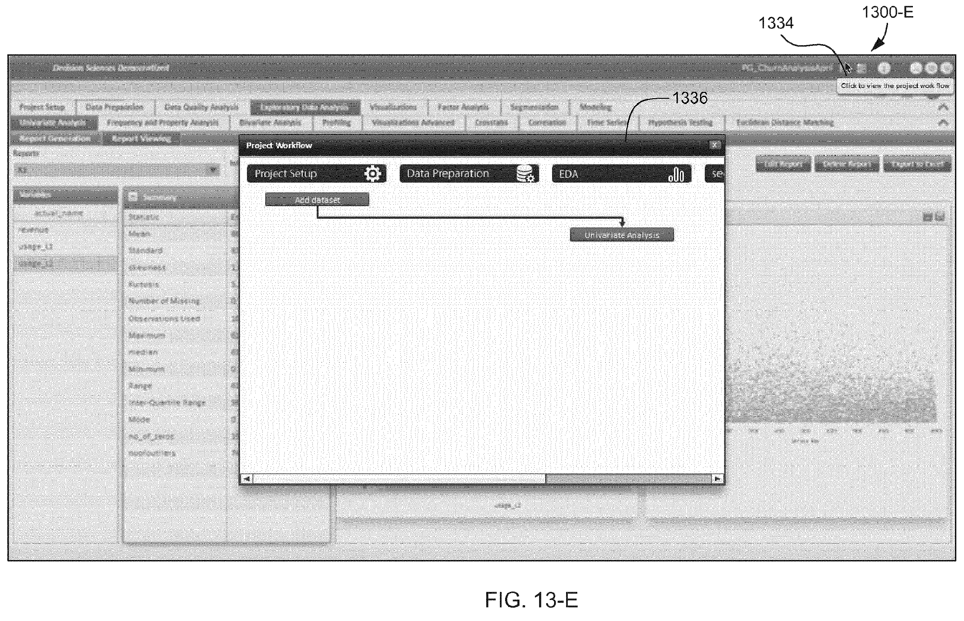

In some example embodiments, the users may view the project workflow at any point in time as the one or more phases of the analytic workflow are executed. FIG. 13-E is an example screen 1300-E illustrating 'project workflow' viewing options at any point of time, according to an example embodiment. The user may select to view the project workflow using the tab 1334 and, a pop-up screen 1336 with the project workflow at that point is presented to the user. As may be seen in this example, the project workflow includes the addition of a data set (as described in FIG 13-B) and the exploratory data analysis with univariate analysis (as described in FIG 13-C) that are displayed on the screen 1336.

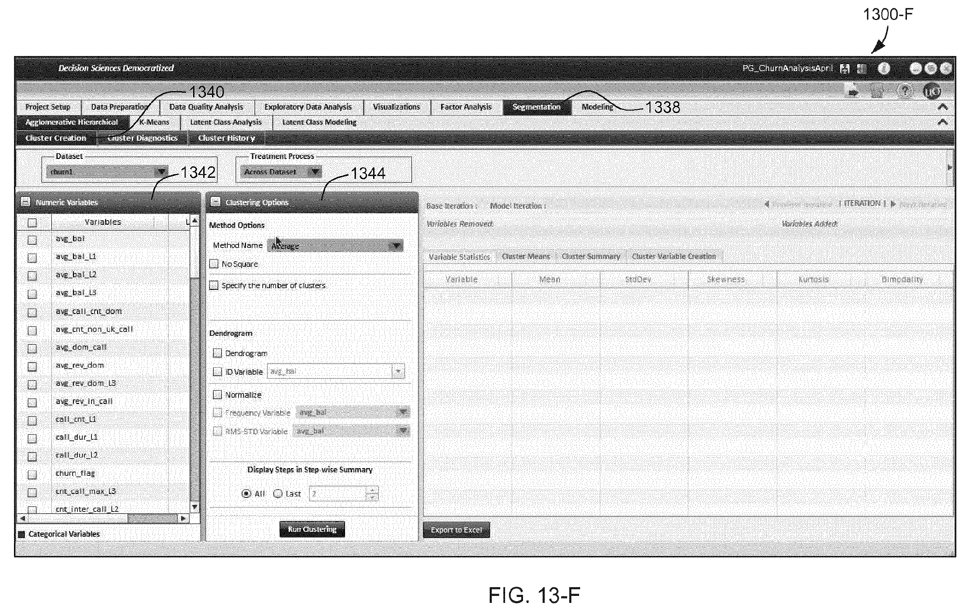

FIG. 13-F is an example screen 1300-F illustrating segmentation operation for a data set, according to an example embodiment. In this example, the segmentation (tab 1338) presents the user with other options such as cluster creation (tab 1340) with the details of numeric variables (table 1342) and clustering options 1344. All the data related to such phases is stored in a repository such as the enterprise memory 110.

As described above, a user may create a project for solving a business problem and the data related to each of the phases of the guided workflow implemented for solving the problem is stored. Some of the phases of the guided workflow are described with respect to FIGS. 13 A-F. It should be noted that one or more phases of the guided workflow may be iterated and data associated with each of the iterations may be stored. In some examples, the execution of the workflow may be automated based upon the previous iterations for different variables and datasets.

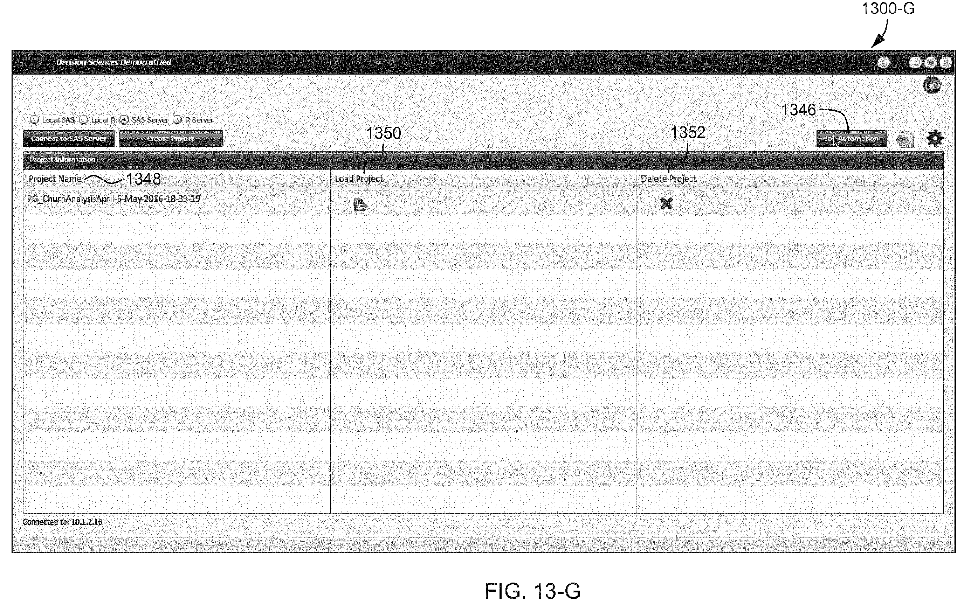

FIG.13-G is an example screen 1300-G illustrating job automation of a project, according to an example embodiment. The user may initiate job automation of a project using the job automation tab 1346. In this example, the user may select the project to be automated using tab 1348 and the steps saved in the project will be executed in the job automation mode. The user may load the project using tab 1350 and may delete the project using tab 1352.

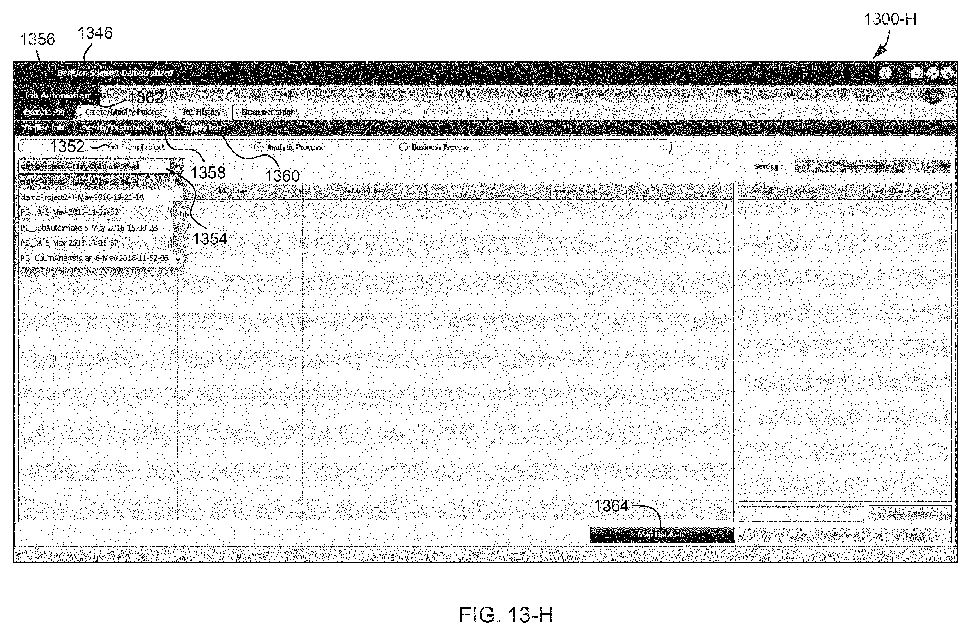

In one example embodiment, once the user selects the job automation option using tab 1346, another screen 1300-H of FIG 13-H is presented to the user. As can be seen, the user may select a particular project from a dropdown menu 1354 by clicking the button 1352 (from Project). The job automation screen 1300-F presents the user with options such as define job 1356, verify job 1358, apply job 1360, execute job 1362 and so forth. In some examples, the user may map datasets to the selected project using tab 1364.

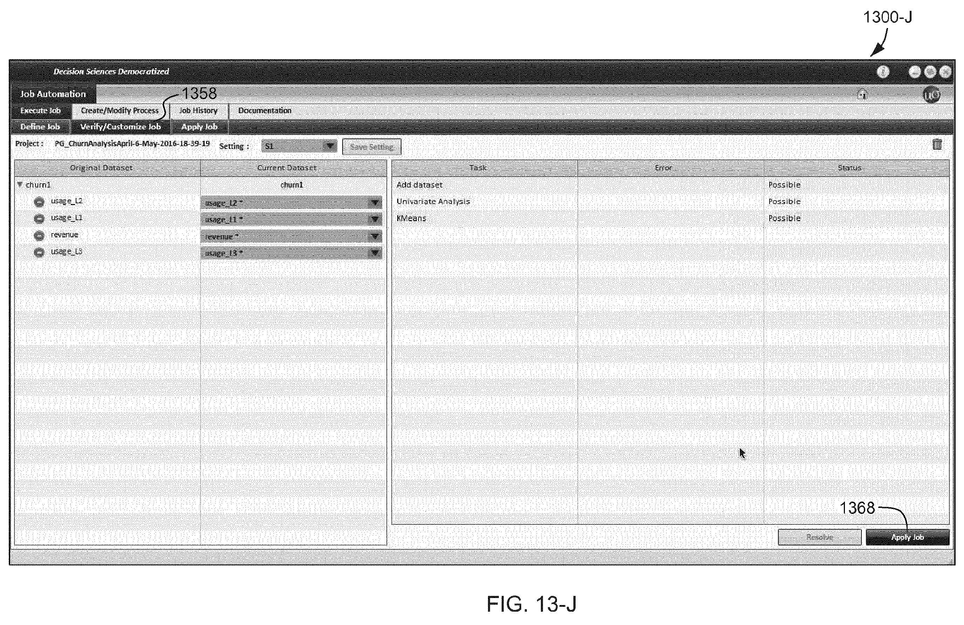

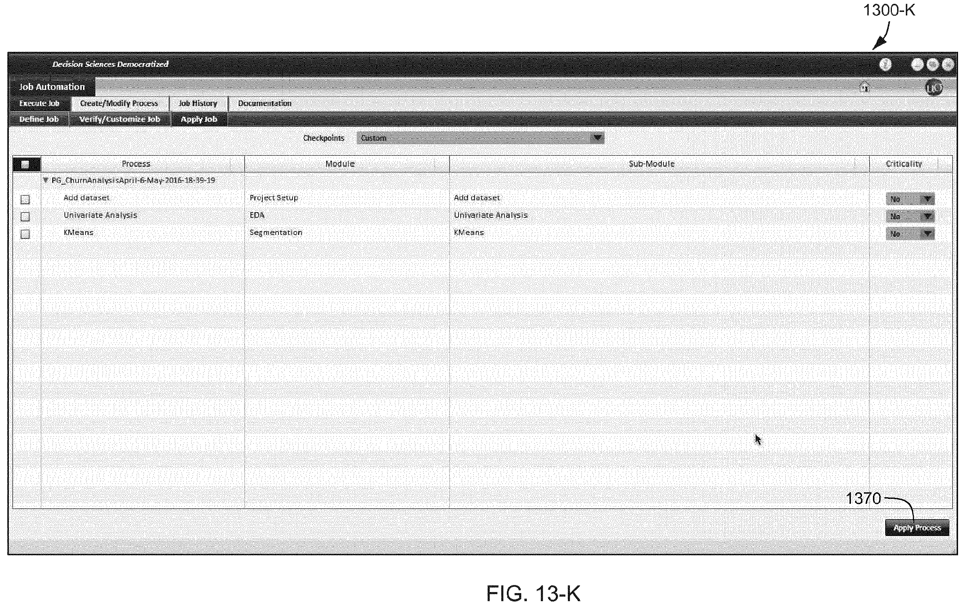

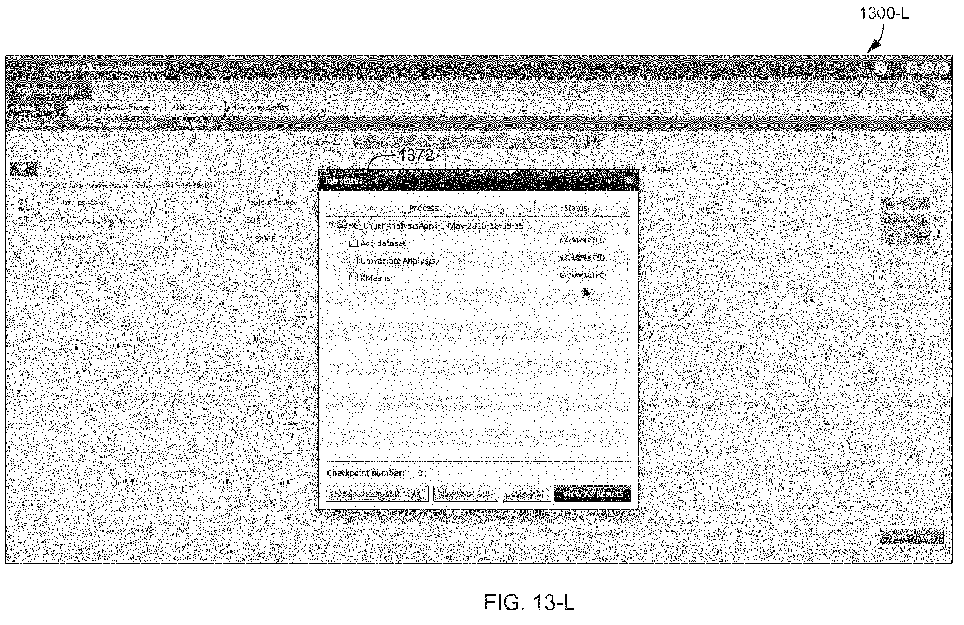

FIG.13-I is an example screen 1300-I illustrating the tasks associated with the job automation, according to an example embodiment. The screen 1300-I may be utilized to define different tasks 1366 for automation. For example, the current project includes tasks such as adding datasets, univariate analysis and segmentation steps that may be executed for selected datasets. Such defined tasks may be executed as part of the job automation of the project.

FIG.13-J is another example screen 1300-J illustrating verification of the tasks associated with the job automation, according to an example embodiment. As can be seen, a user may verify and/or customize the tasks using tab 1358 and then may apply the job to a selected data set using tab 1368. FIG. 13-K is an example screen that illustrates the implementation of the job automation, according to an example embodiment. As can be seen, the screen 1300-K presents the various tasks of the project and the modules with sub-modules associated with the tasks. With the tab 1370, the user may initiate execution of the tasks/phases saved in the project for one or more datasets. The status of execution of the various tasks is presented to the user as can be seen in example screen 1300-L. The pop-screen 1372 shows the status of each of the tasks and presents the results to the user.

As described above in FIG.1, in one example embodiment, the workflow engine 108 facilitates cross-module interaction between several modules such as between the definer module 102, the data preparation module 104 and the analytics module 106 of the guided analytics system 100 for one or more of the plurality of phases of the guided analytic workflow. Moreover, the data generated and/or utilized for each of the plurality of phases of the guided analytic workflow is stored in the enterprise memory 110. It should be noted that such data may be spread across several functionalities of the guided analytics system 100. In one example embodiment, the cross-module interaction between the modules facilitates the utilization of data stored thereby improving the efficiency of the guided analytics system 100. In particular, the cross-module interaction facilitates leveraging of the data/metadata across each functionality and enabling its utilization across any other functionality. For example, the workflow engine 108 facilitates the user to record remarks at each of the plurality of phases of the guided analytic workflow and refer to them wherever needed at a later point in time.

In one or more example embodiments, such remarks may correspond to variables utilized for a problem solving cycle implemented by the guided analytics system 100. Further, a user may also record the origin of the remarks such as whether the remark is generated in modeling or analysis steps of the guided analytic workflow. In one or more example embodiments, metadata related to a dataset or a variable that is repeatedly needed is maintained like a cache. This enables quick access to the metadata.

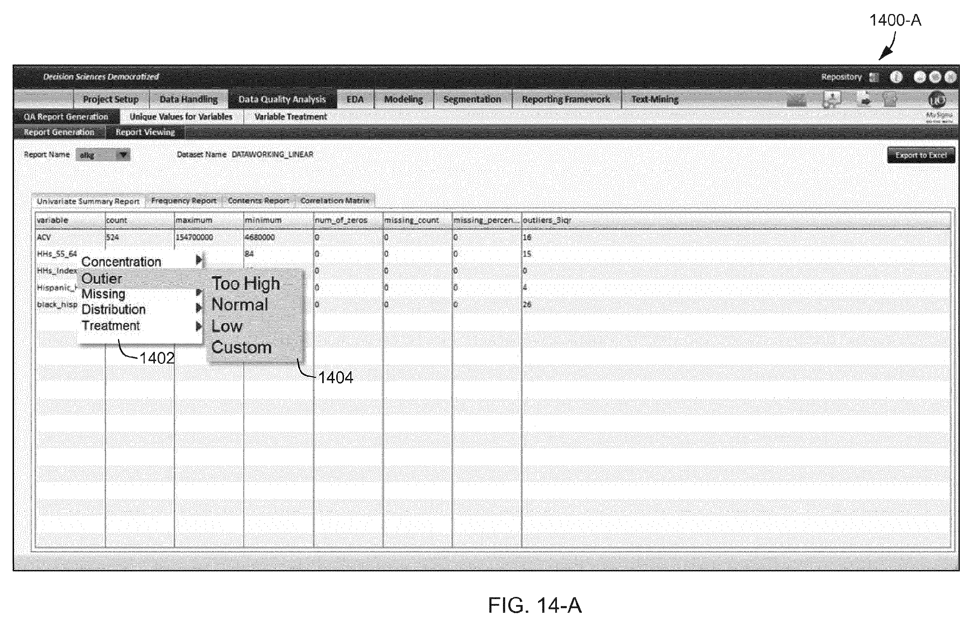

FIG. 14-A shows an example screen 1400-A illustrating an input capture mechanism for facilitating cross-module interaction between various modules of the guided analytics system 100 of FIG. 1, according to an example embodiment. In one example, in each of the phases of the guided analytic workflow implemented by the system 100, the inputs may be captured using a right click functionality. However, other suitable techniques may be utilized. For example, right clicking at a particular variable, or dataset, during a data quality analysis, several options as represented by reference numeral 1402 are presented to the user. For example, the options 1402 related to the variable may include 'concentration', 'outlier', 'missing', 'distribution', etc. The user may select an option for recordation. The user may be then presented with subsequent options based on the previous user selection. For example, on a further right click, a context menu 1404 is shown which includes options such as 'Too high', 'Normal', 'Low', 'custom' etc. The options as shown by reference numeral 1404 are particular to a functionality. In one example embodiment, every such user selection is a record.

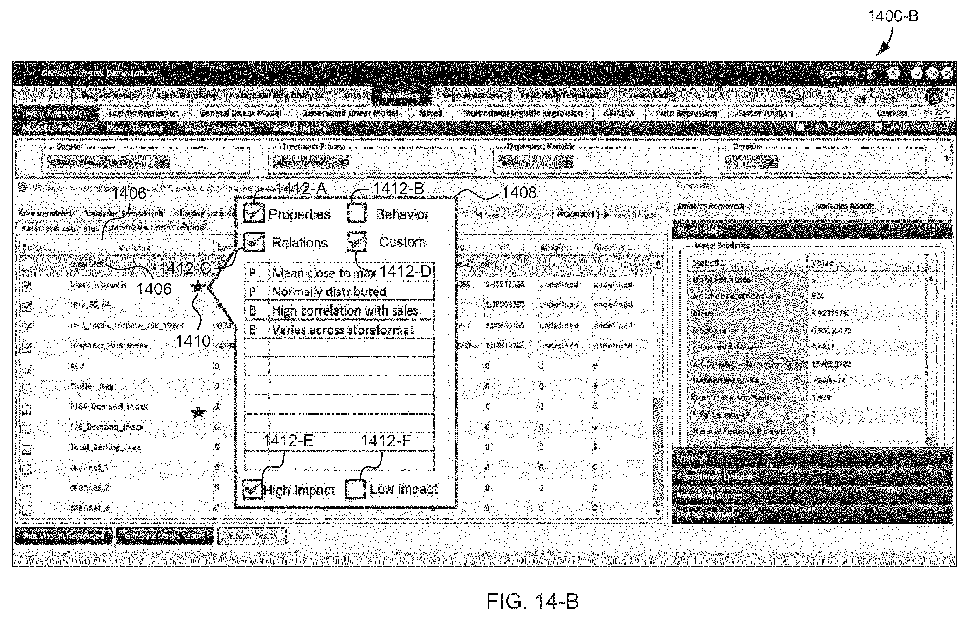

FIG. 14-B shows an example screen 1400-B illustrating the utilization of data stored for facilitating cross-module interaction between various modules of the guided analytics system 100 of FIG. 1, according to an example embodiment. The stored data may be presented to the user inside functionalities to which the remarks are directed. In addition, the user may access the stored data at a common repository with the recorded data. In the illustrated example embodiment, every table 1406 has a column (as shown by reference numeral 1408) that displays the variable name, which will be used as a touch point for the user to view the remarks related to the respective variable. By using the button 1410 as shown on the screen 1400-B, the user is presented with all the remarks that were recorded earlier. In some embodiments, the pop-up screen 1408 with the remarks may include, a filter option in the form of check-box (as represented by reference numeral 1412-A through 1412-F) that can condense the size of list as the user filters the options.

In one example embodiment, the cross-module interaction also facilitates intelligence collation of the recorded data. As the data is generated and consumed across different functionalities of the guided analytic workflow, in one example embodiment, the workflow engine 108 collates the captured data. In one example embodiment, a separate tab may be provided that may include several filters. The filter are created with respect to parameters such as 'User', 'Functionalities', 'Time', 'Importance level' and Navigation. Thus, a variety of mechanisms may be utilized to store data related to each of the plurality of phases of the guided analytic workflow implemented by the guided analytics system 100. Advantageously, such data is utilized at other relevant phases of the guided analytic workflow to increase the efficiency of the system 100.

In one or more example embodiments, the guided analytics system 100 described herein facilitates collaboration between multiple users of the system 100. The system 100 facilitates multiple users to work simultaneously on a project and share the analysis results along with other relevant data generated during implementation of the guided analytic workflow. The system 100 may be operated by one or more users to facilitate access control of the users. The administrator may control permission levels of users such as machines or operating system that may be used by each user. In one example embodiment, the collaboration of the users may be handled at different levels such as 'outside a project' and 'within a project'. As described before, the output and other data generated throughout a business problem solving cycle is stored and maintained in the enterprise memory 108. Such data is accessed by the users and is utilized throughout various phases of the business problem solving cycle.

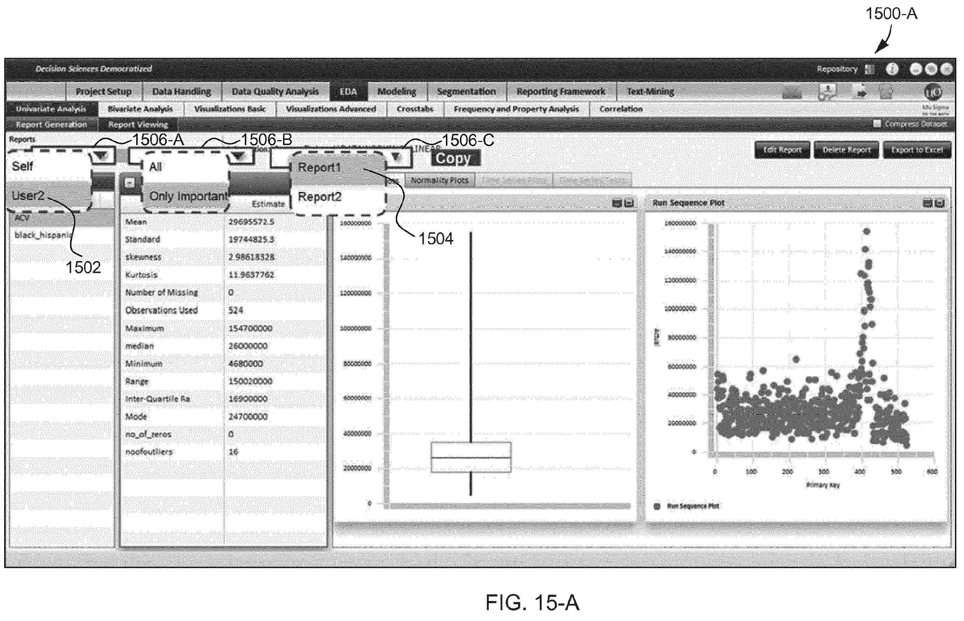

FIG. 15-A shows an example screen 1500-A illustrating collaboration between multiple users working on an Exploratory data analysis, according to an example embodiment. In this example, the system 100 provides access to two users as represented by reference numeral 1502. As can be seen, the reports 1504 of each 'Exploratory data analysis' that is accessible to the two. In addition, other drop-down options (as represented by reference numeral 1506-C) are provided to the users to navigate through reports of other users based on the access control. In some example embodiments, filtering option may be provided to the user to select and view the reports. In addition, the user may also copy the current report so that the report is added to the list of his own reports.

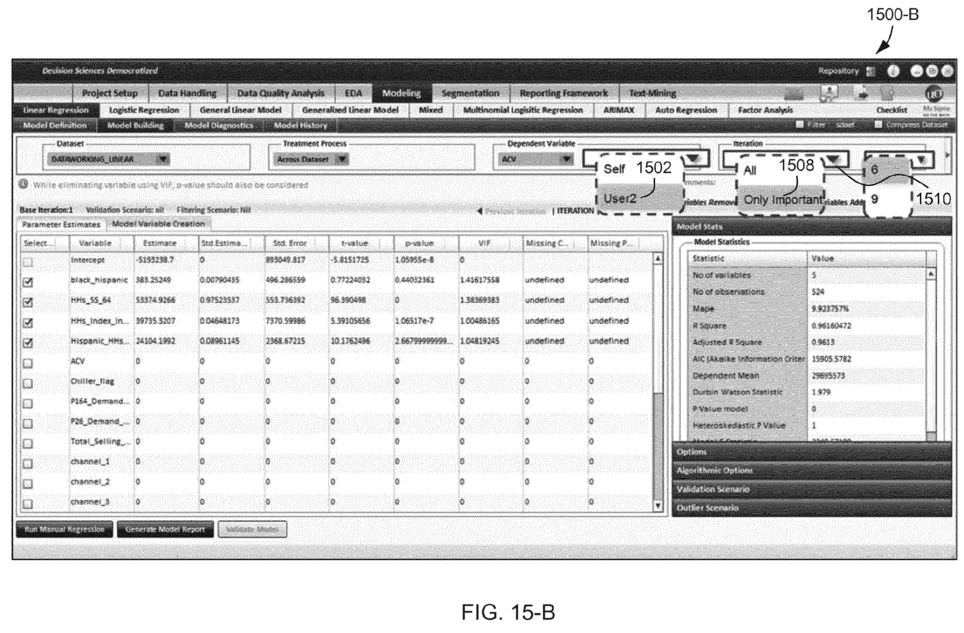

FIG. 15-B shows another example screen 1500-B illustrating collaboration between multiple users during a modeling phase of the guided analytic workflow implemented by the guided analytics system of FIG. 1, according to an example embodiment. In this example embodiment, a user is provided with an option to view iterations performed by other users during the modeling phase of the system 100. In this example, the screen 1500-B is the iteration screen of a particular model available to two users (generally represented by reference numeral 1502). In this example, the iterations 1508 are shown for each of the users. Further, an iteration drop- down 1510 will be populated by the synced iterations for a selected user. In some examples, the user may perform his own iteration for an iteration that was performed by another user. Moreover, a filter may be utilized for the iteration drop-down 1510 for selecting particular iterations.

In one example embodiment, the guided analytics system 100 facilitates synchronization of the data among multiple users. In one example embodiment, the synchronization includes, synchronization of the results and/or outputs generated by the system 100 like project related content generated by other users. In another example, the synchronization includes synchronization of peripheral data such as meta data generated by other users.

The synchronization may be an application level synchronization, project level synchronization, or in-functionality synchronization. The guided analytics system 100 also facilitates generation of the 'synchronization history' to collate all the synchronization related operations. The synchronization history may have different views such as sorting by functionality, or by user. In addition the users may have options to view failed synchronization. In one example embodiment, the user may synchronize reports generated by different users. For example, one user may selectively synchronize, reports for some users or for all users together.

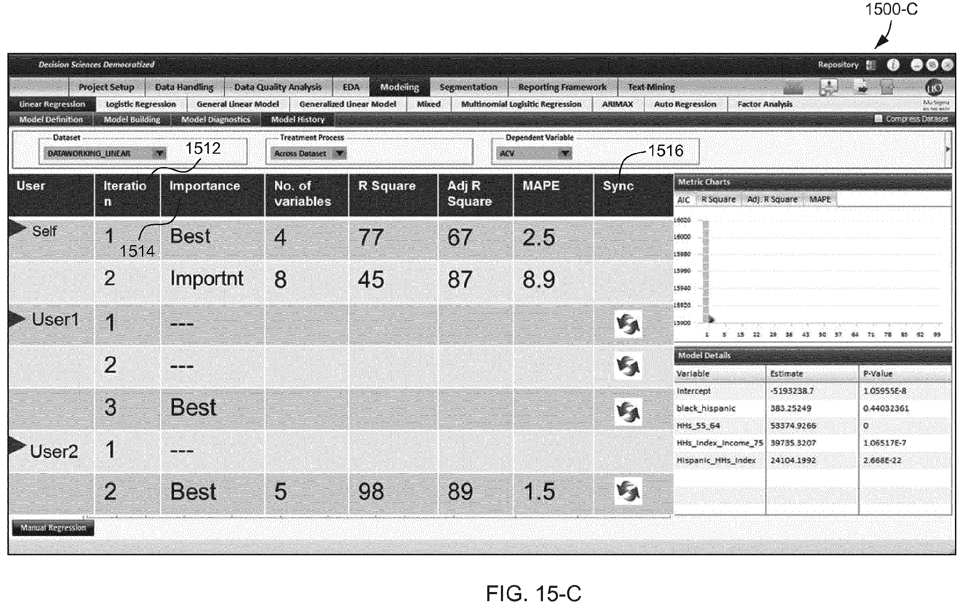

The synchronization operation may be performed during various phases of the implementation of the guided analytic workflow. FIG 15-C shows an example screen 1500-C illustrating the synchronization for modeling operation, according to an example embodiment. In this example, the iterations associated with a user are illustrated in a tree structure hierarchy and the iteration numbers of the synchronized or not synchronized iterations are represented by reference numeral 1512. Here, the synchronization tab 1516 is placed at the end of each row. Based on the importance of an iteration (represented by reference numeral 1514), the user may select to synchronization an iteration. In some example embodiments, batch mode is implemented for synchronization of selected or all users.

In one example embodiment, the guided analytics system 100 facilitates collaboration of multiple users while working simultaneously on a single project. The users may communicate and collaborate in real-time while working on the project.

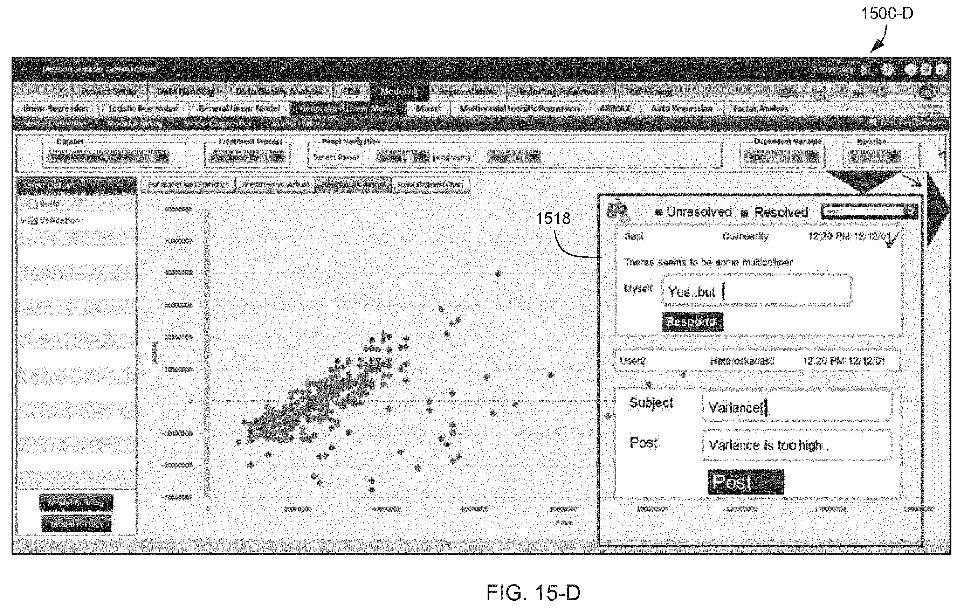

FIG 15-D is an example screen shot 1500-D illustrating collaboration of multiple users while working on a modeling phase of the guided analytic workflow implemented by the guided analytics system 100 of FIG. 1, according to an example embodiment. In one example embodiment, a user posts comments and/or messages to other users for different output generated during the implementation of the work flow. For example, the users may comment on a table 1518 of results or a graph generated as an output. The users may send messages in real-time to other users of a particular project.

In one example embodiment, the comments from all or selected set of users are collated that may be referred by any of the users at any point in time. In another example embodiment, updates such as collection of automatic notifications generated by the system are stored. Such updates may be viewed by the other users of the system 100.

As described above, example embodiments provide an integrated analytics-to-insight framework that may enable an analyst such as a decision scientist to address a wide range of business problems. The guided analytic workflow enables the user to implement the various phases of problem solving such as data preparation, data quality analysis, exploratory data analysis, and modeling and guides the user along each of these phases. Moreover, example embodiments provide the ability to easily iterate and create new reports based on learnings from earlier iterations of the problem solving phases.

Moreover, the guided analytics system harmonizes analytical and business perspectives by translating statistical results into business outcomes. The analyst may evaluate the analytical solutions along with business metrics to determine an optimal solution for the business problem. The system creates an enterprise memory of the entire problem solving journey. The enterprise memory stores data and reports created throughout the problem solving journey. This enterprise memory may be accessed and shared with multiple stakeholders.

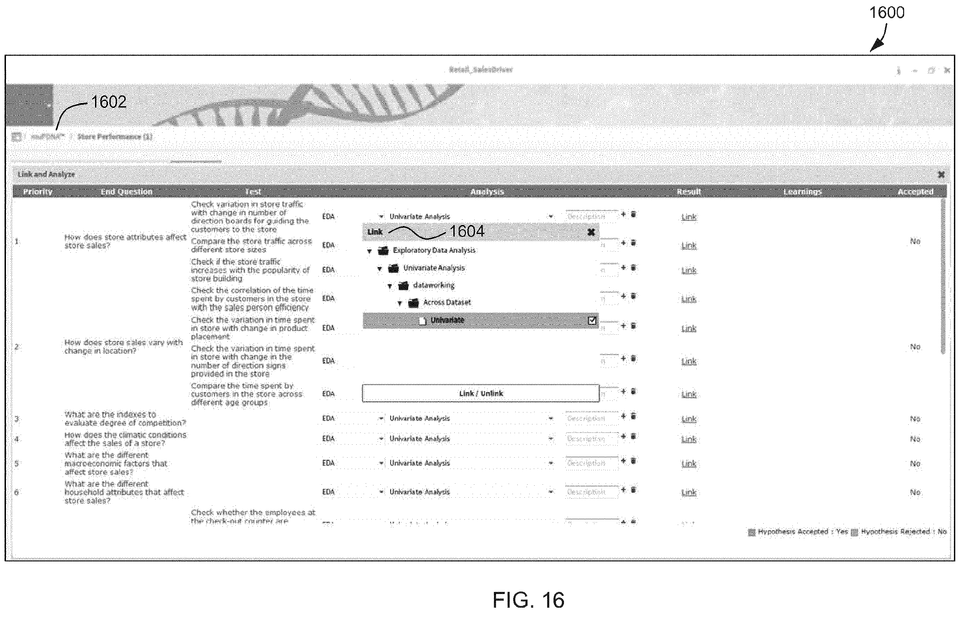

FIG. 16 shows an example screen 1600 illustrating a 'Hypotheses-Analysis Linkage' to map the plurality of hypotheses with the generated reports and one or more problems, according to an example embodiment. In one example embodiment, the Hypotheses link in the problem definition phase tab 1602 connects the problem description (as described in detail in US application Ser. No 13/166,251 entitled "System and method for formulating a problem" filed on the June 22, 2011 and Ser. No. 13/852,835 filed on March 28, 2013, entitled "Data Solutions System," the entire content of which is incorporated herein by reference.) with the analysis. The entire analysis done during the process of proving and/or disproving the hypotheses proposed during the problem definition phase, is connected to the relevant analysis.

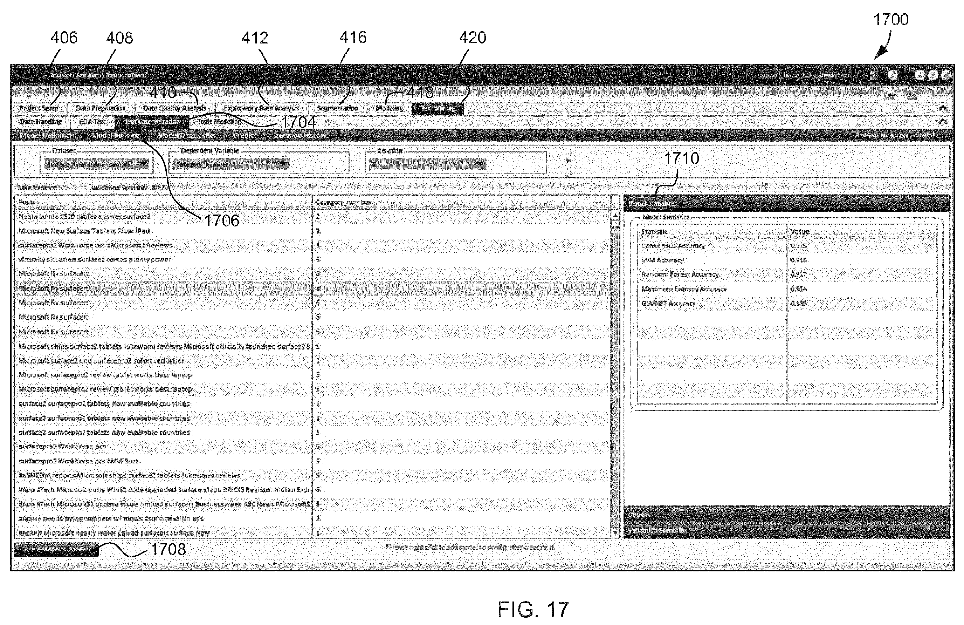

FIG. 17 shows an example text mining screen 1700 for integrating structured and unstructured data sets associated with the business problem, according to an example embodiment. As a user selects the 'Text mining' (tab 420), model building option with respect to text categorization (tab 1704) is displayed on the screen. The model building (tab 1706) enables the user to create and validate a model (using button 1708). The model statistics is displayed on screen 1710. The text categorization (tab 1704) generates a plurality of models of the analytics text set based on the results of the exploratory analysis. In one example embodiment, the analytics text set may either be a categorized text set or a non-categorized text set. The text categorization performs several operations such as model building, model diagnostics, predict and iteration history using machine learning models.

Accordingly, the guided analytics system 100 democratizes and scales the use of analytics to solve multiple business problems. Moreover, the system 100 ensures efficient data handling, embeds best practices and implements quality checks in a white box environment to improve productivity and accelerates the analysis to insight cycle. In addition, the system 100 lays out structured problem solving approach to address wide range of business problems.

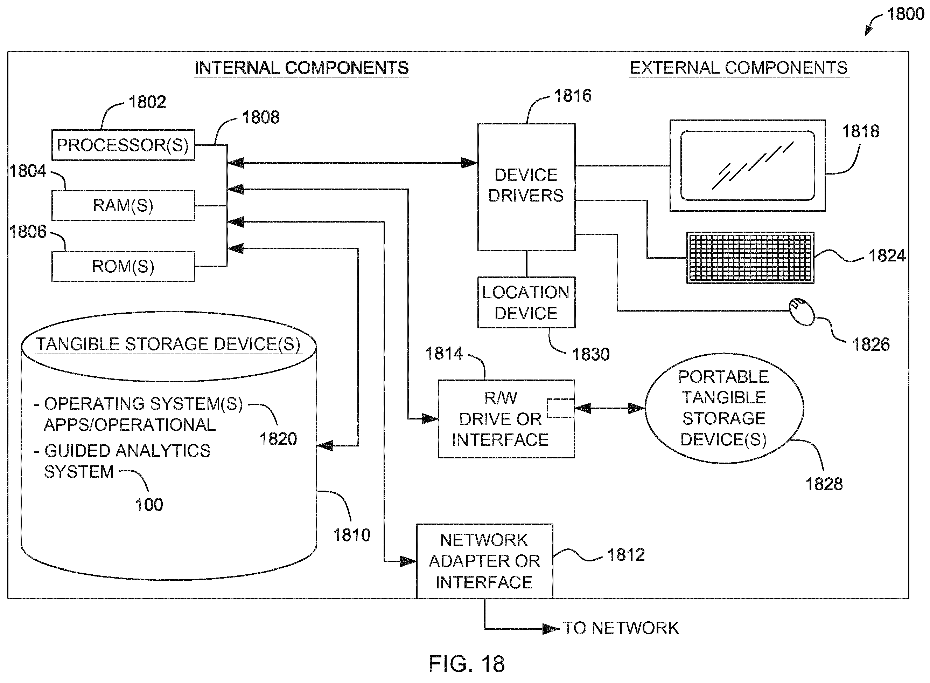

The modules of the guided analytics system 100 described herein are implemented in computing devices. One example of a computing device 1800 is described below in FIG.18. The computing device includes one or more processor 1802, one or more computer-readable RAMs 1804 and one or more computer-readable ROMs 1806 on one or more buses 1808. Further, computing device 1800 includes a tangible storage device 1810 that may be used to execute operating systems 1820 and guided analytics system 100. The various modules of the guided analytics system 100 including a definer module 102, a data preparation module 104, an analytics module 106, a workflow engine 108, an enterprise memory 110 and a reporting module 112 may be stored in tangible storage device 1810. Both, the operating system 1820 and the guided analytics system 100 are executed by processor 1802 via one or more respective RAMs 1804 (which typically include cache memory). The execution of the operating system 1820 and/or the analytics system 100 by the processor 1802, configures the processor 1802 as a special purpose processor configured to carry out the functionalities of the functionalities of the operation system 1820 and/or the analytics system 100, as described above.

Examples of storage devices 1810 include semiconductor storage devices such as ROM 1806, EPROM, flash memory or any other computer-readable tangible storage device that may store a computer program and digital information.

Computing device also includes a R/W drive or interface 1814 to read from and write to one or more portable computer-readable tangible storage devices 1828 such as a CD-ROM, DVD, memory stick or semiconductor storage device. Further, network adapters or interfaces 1812 such as a TCP/IP adapter cards, wireless Wi-Fi interface cards, or 3G or 4G wireless interface cards or other wired or wireless communication links are also included in computing device.

In one example embodiment, the guided analytics system 100 which includes the definer module 102, the data preparation module 104, the analytics module 106, the workflow engine 108, the enterprise memory 110 and the reporting module 112 may be stored in tangible storage device 1810 and may be downloaded from an external computer via a network (for example, the Internet, a local area network or other, wide area network) and network adapter or interface 1812.

Computing device further includes device drivers 1816 to interface with input and output devices. The input and output devices may include a computer display monitor 1818, a keyboard 1824, a keypad, a touch screen, a computer mouse 1826, and/or some other suitable input device.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

While only certain features of several embodiments have been illustrated and described herein, many modifications and changes will occur to those skilled in the art. It is, therefore, to be understood that the appended claims are intended to cover all such modifications and changes as fall within the true spirit of inventive concepts.

The aforementioned description is merely illustrative in nature and is in no way intended to limit the disclosure, its application, or uses. The broad teachings of the disclosure may be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the example embodiments is described above as having certain features, any one or more of those features described with respect to any example embodiment of the disclosure may be implemented in and/or combined with features of any of the other embodiments, even if that combination is not explicitly described. In other words, the described example embodiments are not mutually exclusive, and permutations of one or more example embodiments with one another remain within the scope of this disclosure.

The patent claims filed with the application are formulation proposals without prejudice for obtaining more extensive patent protection. The applicant reserves the right to claim even further combinations of features previously disclosed only in the description and/or drawings.

The example embodiment or each example embodiment should not be understood as a limiting/restrictive of inventive concepts. Rather, numerous variations and modifications are possible in the context of the present disclosure, in particular those variants and combinations which may be inferred by the person skilled in the art with regard to achieving the object for example by combination or modification of individual features or elements or method steps that are described in connection with the general or specific part of the description and are contained in the claims and/or the drawings, and, by way of combinable features, lead to a new subject matter or to new method steps or sequences of method steps, including insofar as they concern production, testing and operating methods. Further, elements and/or features of different example embodiments may be combined with each other and/or substituted for each other within the scope of this disclosure and appended claims.

References back that are used in dependent claims indicate the further embodiment of the subject matter of the main claim by way of the features of the respective dependent claim, they should not be understood as dispensing with obtaining independent protection of the subject matter for the combinations of features in the referred-back dependent claims. Furthermore, with regard to interpreting the claims, where a feature is concretized in more specific detail in a subordinate claim, it should be assumed that such a restriction is not present in the respective preceding claims.

Since the subject matter of the dependent claims in relation to the prior art on the priority date may form separate and independent inventions, the applicant reserves the right to make them the subject matter of independent claims or divisional declarations. They may furthermore also contain independent inventions, which have a configuration that is independent of the subject matters of the preceding dependent claims.

Still further, any one of the above-described and other example features of example embodiments may be embodied in the form of an apparatus, method, system, computer program, tangible computer readable medium and tangible computer program product. For example, of the aforementioned methods may be embodied in the form of a system or device, including, but not limited to, any of the structure for performing the methodology illustrated in the drawings.

In this application, including the definitions below, the term 'module' or the term 'controller' may be replaced with the term 'circuit.' The term 'module' may refer to, be part of, or include processor hardware (shared, dedicated, or group) that executes code and memory hardware (shared, dedicated, or group) that stores code executed by the processor hardware.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

Further, at least one example embodiment relates to a non-transitory computer-readable storage medium comprising electronically readable control information (e.g., computer-readable instructions) stored thereon, configured such that when the storage medium is used in a controller of a magnetic resonance device, at least one example embodiment of the method is carried out.

Even further, any of the aforementioned methods may be embodied in the form of a program. The program may be stored on a non-transitory computer readable medium, such that when run on a computer device (e.g., a processor), cause the computer-device to perform any one of the aforementioned methods. Thus, the non-transitory, tangible computer readable medium, is adapted to store information and is adapted to interact with a data processing facility or computer device to execute the program of any of the above mentioned embodiments and/or to perform the method of any of the above mentioned embodiments.

The computer readable medium or storage medium may be a built-in medium installed inside a computer device main body or a removable medium arranged so that it may be separated from the computer device main body. The term computer-readable medium, as used herein, does not encompass transitory electrical or electromagnetic signals propagating through a medium (such as on a carrier wave), the term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices), volatile memory devices (including, for example static random access memory devices or a dynamic random access memory devices), magnetic storage media (including, for example an analog or digital magnetic tape or a hard disk drive), and optical storage media (including, for example a CD, a DVD, or a Blu-ray Disc). Examples of the media with a built-in rewriteable non-volatile memory, include but are not limited to memory cards, and media with a built-in ROM, including but not limited to ROM cassettes, etc. Furthermore, various information regarding stored images, for example, property information, may be stored in any other form, or it may be provided in other ways.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave), the term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices), volatile memory devices (including, for example static random access memory devices or a dynamic random access memory devices), magnetic storage media (including, for example an analog or digital magnetic tape or a hard disk drive), and optical storage media (including, for example a CD, a DVD, or a Blu-ray Disc). Examples of the media with a built-in rewriteable non-volatile memory, include but are not limited to memory cards, and media with a built-in ROM, including but not limited to ROM cassettes, etc. Furthermore, various information regarding stored images, for example, property information, may be stored in any other form, or it may be provided in other ways.

The apparatuses and methods described in this application may be partially or fully implemented by a special purpose computer created by configuring a general purpose computer to execute one or more particular functions embodied in computer programs. The functional blocks and flowchart elements described above serve as software specifications, which may be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language) or XML (extensible markup language), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Haskell, Go, SQL, R, Lisp, Java®, Fortran, Perl, Pascal, Curl, OCaml, Javascript®, HTML5, Ada, ASP (active server pages), PHP, Scala, Eiffel, Smalltalk, Erlang, Ruby, Flash®, Visual Basic®, Lua, and Python®.

None of the elements recited in the claims are intended to be a means-plus-function element within the meaning of 35 U.S.C. § 112(f) unless an element is expressly recited using the phrase "means for" or, in the case of a method claim, using the phrases "operation for" or "step for."

Example embodiments being thus described, it will be obvious that the same may be varied in many ways. Such variations are not to be regarded as a departure from the spirit and scope of inventive concepts, and all such modifications as would be obvious to one skilled in the art are intended to be included within the scope of the following claims.

## Claims

1. A guided analytics system, the guided analytics system comprising:
a memory having computer-readable instructions stored therein; and
a processor configured to,
define a problem,
identify and prepare one or more data sets associated with the problem,
analyze the one or more data sets to generate one or more models, and determine, using a guided analytic workflow, one or more solutions to the problem based on the one or more models, the guided analytic workflow including a plurality of workflow resources associated with each of a plurality of phases of the guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

2. The guided analytics system of claim 1, wherein the memory is further configured to store,
the plurality of workflow resources associated with each of the plurality of phases of the guided analytic workflow;
data related to each of the plurality of phases of the guided analytic workflow; and
one or more solutions to the problem.

3. The guided analytics system of claim 1, wherein the processor is configured to execute the computer-readable instructions to determine attributes of the one or more data sets and to determine a plurality of correlations within each of the data sets.

4. The guided analytics system of claim 1, wherein the processor is configured to execute the computer-readable instructions to implement an iterative analytic workflow wherein one or more phases of the worflow are iteratively executed to determine the one or more solutions.

5. The guided analytics system of claim 5, wherein the processor is configured to execute the computer-readable instructions to facilitate automation of implementation of one or more of the plurality of phases of the guided analytic workflow based upon previous iterations of the workflow.

6. The guided analytics system of claim 1, wherein the processor is configured to execute the computer-readable instructions to generate a plurality of reports corresponding to each of the plurality of phases of the workflow.

7. The guided analytics system of claim 6, wherein the processor is configured to execute the computer-readable instructions to translate one or solutions of the problem into one or more actions to address the problem.

8. The guided analytics system of claim 1, wherein the processor is configured to execute the computer-readable instructions to facilitate cross-module interaction for one or more of the plurality of phases of the guided analytic workflow.

9. The guided analytics system of claim 1, wherein the processor is configured to execute the computer-readable instructions to generate a plurality of hypotheses associated with the problem and map the plurality of hypotheses with the generated reports to track progress of the guided analytic workflow.

10. The guided analytics system of claim 1, wherein the processor is configured to execute the computer-readable instructions to integrate structured and unstructured data sets associated with the problem.

11. The guided analytics system of claim 1, wherein the plurality of workflow resources include a plurality of guides with information about at least one of,
the at least one of the statistical and analytical techniques related to each of the plurality of phases of the guided analytic workflow,
implementation parameters associated with each of the at least one of statistical and analytical techniques, and
a plurality of checklists related to each of the plurality of phases of the guided analytic workflow.

12. A guided analytics system adapted for use in an establishment, the guided analytics system comprising:
a processor configured to execute a guided workflow to generate one or more solutions for a problem related to the establishment, the guided workflow including, a plurality of phases; and
a plurality of workflow resources associated with each of the plurality of phases of the guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

13. The guided analytics system of claim 12, wherein the processor is configured to enable a user to navigate the guided analytics system in accordance with the plurality of phases of the guided analytic workflow.

14. The guided analytics system of claim 12, wherein the establishment is at least one of one or more organizations, one or more retail outlets, one or more consumer outlets, and one or more hotels.

15. The guided analytics system of claim 12, wherein the processor is configured to,
define the problem;
identify and prepare one or more data sets associated with the problem;
analyze the one or more data sets to generate one or more models and to provide the one or more solutions to the problem using the one or more models.

16. A guided analytics system, the guided analytics system comprising:
a memory having computer-readable instructions stored therein; and
a processor configured to execute an iterative guided analytic workflow for a data set to generate one or more solutions for a problem; the iterative guided analytic workflow including a plurality of phases, wherein data related to each iteration of the iterative guided analytic workflow is stored in the memory and wherein the memory is accessed by a user to view the data corresponding to the iterations of the workflow to determine a customized analytic workflow for the business problem;
a plurality of workflow resources associated with each of the plurality of phases of the iterative guided analytic workflow, the plurality of workflow resources being presentable to a user at one or more phases to provide at least one of analytical and statistical information related to a corresponding one of the plurality of phases and to facilitate user selection of one or more analytical techniques and associated parameters for the corresponding phase.

17. The guided analytics system of claim 16, wherein the user selects and/or modifies one or more phases of the guided analytic workflow based on the previous iterations to determine the customized analytic workflow.

18. The guided analytics system of claim 16, wherein the processor is configured to automate the execution of the customized analytic workflow by executing one or more tasks corresponding to each of the plurality of selected phases of the customized analytic workflow.

19. The guided analytics system of claim 16, wherein the processor is configured to
define the problem;
identify and prepare one or more data sets associated with the problem; and
analyze the one or more data sets to generate one or more models and to provide the one or more solutions to the problem using the one or more models.
